(19) Europäisches Patentamt
European Patent Office
Office européen des brevets

(11) **EP 4 545 171 A1**

(12) **EUROPEAN PATENT APPLICATION**
published in accordance with Art. 153(4) EPC

(43) Date of publication:
**30.04.2025 Bulletin 2025/18**

(21) Application number: **23827297.5**

(22) Date of filing: **23.06.2023**

(51) International Patent Classification (IPC):
***B01D 61/36*** (2006.01)

(52) Cooperative Patent Classification (CPC):
**B01D 61/36**

(86) International application number:
**PCT/JP2023/023375**

(87) International publication number:
**WO 2023/249115 (28.12.2023 Gazette 2023/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.06.2022 JP 2022102101**

(71) Applicant: **Asahi Kasei Kabushiki Kaisha Tokyo 1000006 (JP)**

(72) Inventor: **INOUE, Fumiyoshi Tokyo 100-0006 (JP)**

(74) Representative: **D Young & Co LLP 3 Noble Street London EC2V 7BQ (GB)**

(54) **METHOD FOR ORGANIC-SOLVENT REMOVAL**

(57)     A method for organic-solvent removal which comprises bringing a raw solution comprising a solute, an organic solvent, and water into contact with an absorbing liquid, with a hydrophobic porous membrane interposed therebetween, to move the organic solvent contained in the raw solution to the absorbing liquid, wherein the absorbing liquid may or may not contain an organic solvent of the same kind as the organic solvent contained in the raw solution, the raw solution at 25°C has a vapor pressure of the organic solvent of 0.60 kPa or greater, the raw solution being in contact with the hydrophobic porous membrane has a temperature of 40°C or lower, the absorbing liquid being in contact with the hydrophobic porous membrane has a temperature of 5°C or higher, the difference in temperature between the raw solution and the absorbing liquid is 10°C or less, and the raw solution being in contact with the hydrophobic porous membrane has a higher vapor pressure of the organic solvent than the absorbing liquid being in contact with the hydrophobic porous membrane.

Fig. 2

**Description**

FIELD

The present invention relates to a method for organic solvent removal.

BACKGROUND

A large number of feed solutions containing water and organic solvents as solvents are used in industry, and such feed solutions require concentration.

One example of such use is in the process of production of pharmaceuticals. The field of pharmaceutical production has recently seen development of pharmaceuticals comprising medium molecular weight peptides with molecular weights of 1,000 or greater, and macromolecular structures with molecular weights of 10,000 or greater. Such pharmaceuticals are commonly synthesized and purified in organic solvents, or in mixed solvents comprising water and organic solvents. However, the organic solvent must be removed in order for the obtained synthetic substance or product to be used as a commercial product.

Removal of an organic solvent from a feed solution containing a valuable substance such as a pharmaceutical component as the solute is usually carried out by conventional vacuum distillation or thin-film distillation. PTL 1, for example, describes a process for obtaining a target substance by purification via a method of carrying out vacuum distillation and thin-film distillation in that order, using a naturally derived oil as the starting material.

In recent years, membrane distillation methods have been the focus of increasing attention as alternative methods for removing organic solvents from feed solutions that comprise water and an organic solvent as the solvent. In membrane distillation methods, the feed solution is contacted with an absorbing solution (cooling fluid) through a hydrophobic porous membrane that does not allow passage of water. With the driving force as the difference in vapor pressure of the organic solvents between the feed solution and the absorbing solution, only the vapor of the organic solvent in the feed solution penetrates through the hydrophobic porous membrane, thereby moving to the absorbing solution side. This principle can be applied to remove the organic solvent (alone) from the feed solution. PTL 2, for example, proposes removal of an organic solvent from a feed solution by using a membrane module for membrane distillation that contains porous hollow fiber membranes hydrophobized by coating of a water repellent in the membrane module housing.

[CITATION LIST]

[PATENT LITERATURE]

[PTL 1] Japanese Unexamined Patent Publication No. 2021-181535
[PTL 2] International Patent Publication No. WO2021/070955

SUMMARY

[TECHNICAL PROBLEM]

The vacuum distillation and thin-film distillation described in PTL 1 require heating of the feed solution to a high temperature. Consequently, when the valuable substance (solute) in the feed solution has low heat resistance there is a risk of degeneration or inactivation of the valuable substance.

In the membrane distillation method described in PTL 2, prolonged operation may result in the problem of "wetting" of the surface of the hydrophobic porous membrane by the feed solution, whereby the feed solution itself, rather than vapor of the organic solvent, permeate through the membrane.

The present invention has been accomplished in light of these circumstances, and its object is to provide an organic solvent removal method that allows an organic solvent to be removed from a feed solution comprising water and an organic solvent as solvents, in an efficient and long-term stable manner and without causing degeneration or inactivation of valuable substances.

[SOLUTION TO PROBLEM]

Aspects of the invention for achieving the aforementioned goal are as follows.

<Aspect 1>

An organic solvent removal method in which a feed solution comprising a solute, an organic solvent and water is contacted with an absorbing solution through a hydrophobic porous membrane, causing the organic solvent in the feed solution to move into the absorbing solution, wherein:

the absorbing solution may contain or not contain an organic solvent of the same type as the organic solvent in the feed solution,
the vapor pressure of the organic solvent in the feed solution at 25°C is 0.60 kPa or higher,
the temperature of the feed solution that contacts with the hydrophobic porous membrane is 40°C or lower,
the temperature of the absorbing solution that contacts with the hydrophobic porous membrane is 5°C or higher,
the temperature difference between the feed solution and the absorbing solution is 10°C or less, and
the vapor pressure of the organic solvent in the feed solution that contacts with the hydrophobic porous membrane is higher than the vapor pressure of the organic solvent in the absorbing solution that contacts with the hydrophobic porous membrane.

<Aspect 2>

The organic solvent removal method according to aspect 1, wherein the difference between the vapor pressure of the organic solvent in the feed solution that contacts with the hydrophobic porous membrane and the vapor pressure of the organic solvent in the absorbing solution that contacts with the hydrophobic porous membrane is greater than 0 kPa and 15 kPa or less.

<Aspect 3>

The organic solvent removal method according to aspect 1, wherein the temperature of the feed solution that contacts with the hydrophobic porous membrane is 35°C or lower.

<Aspect 4>

The organic solvent removal method according to aspect 1, wherein the linear speed of the absorbing solution, when the absorbing solution contacts with the hydrophobic porous membrane, is 1.0 cm/s or greater.

<Aspect 5>

The organic solvent removal method according to aspect 1, wherein the linear speed of the feed solution, when the feed solution contacts with the hydrophobic porous membrane, is 50 cm/s or lower.

<Aspect 6>

The organic solvent removal method according to aspect 1, wherein:

the linear speed of the absorbing solution, when the absorbing solution contacts with the hydrophobic porous membrane, is 1.0 cm/s or greater, and
the linear speed of the feed solution, when the feed solution contacts with the hydrophobic porous membrane, is 50 cm/s or lower.

<Aspect 7>

The organic solvent removal method according to aspect 3, wherein:

the linear speed of the absorbing solution, when the absorbing solution contacts with the hydrophobic porous membrane, is 1.0 cm/s or greater, and
the linear speed of the feed solution, when the feed solution contacts with the hydrophobic porous membrane, is 50 cm/s or lower.

EP 4 545 171 A1

<Aspect 8>

An organic solvent removal device comprising:

a membrane module for membrane distillation having a hydrophobic porous membrane, a space A for contact of the feed solution with one side of the hydrophobic porous membrane, and a space B for contact of the absorbing solution with the other side of the hydrophobic porous membrane,
a feed solution pump for delivery of the feed solution to the space A, and
an absorbing solution pump for delivery of the absorbing solution to the space B,
wherein the organic solvent removal device may have or not have a heat exchanger in the tubing for delivery of the feed solution, and
when the organic solvent removal device has a heat exchanger, the value of the effective area of the heat exchanger divided by the effective membrane area of the membrane module for membrane distillation is 1.5 or lower.

<Aspect 9>

The organic solvent removal device according to aspect 8, which does not have the heat exchanger.

<Aspect 10>

The organic solvent removal device according to aspect 8, which has the heat exchanger, and wherein the difference between the temperature of the heating medium passing through the heat exchanger and the predetermined temperature of the feed solution introduced into the membrane module for membrane distillation, is 10°C or lower.

<Aspect 11>

The organic solvent removal device according to any one of aspects 8 to 10, which is to be used for carrying out the organic solvent removal method according to aspect 1.

<Aspect 12>

A concentration method for a feed solution comprising a solute, an organic solvent and water, the method comprising:

organic solvent removal in which the feed solution and an absorbing solution are contacted through a hydrophobic porous membrane, causing the organic solvent in the feed solution to move into the absorbing solution, and
water removal by a forward osmosis process, in which the feed solution and a draw solution are contacted through a forward osmosis membrane, causing the water in the feed solution to move into the draw solution,

wherein in the organic solvent removal,

the absorbing solution may contain or not contain an organic solvent of the same type as the organic solvent in the feed solution,
the vapor pressure of the organic solvent in the feed solution at 25°C is 0.60 kPa or higher,
the temperature of the feed solution that contacts with the hydrophobic porous membrane is 40°C or lower,
the temperature of the absorbing solution that contacts with the hydrophobic porous membrane is 5°C or higher,
the temperature difference between the feed solution and the absorbing solution is 10°C or lower, and
the vapor pressure of the organic solvent in the feed solution that contacts with the hydrophobic porous membrane is higher than the vapor pressure of the organic solvent in the absorbing solution that contacts with the hydrophobic porous membrane.

<Aspect 13>

A concentration system comprising an organic solvent removal device according to aspect 8 and a water removal device,
wherein the water removal device is a water removal device which comprises:
a forward osmosis membrane module having:

a space C for contact of one side of the forward osmosis membrane with a feed solution, and
a space D for contact of the other side of the forward osmosis membrane with a draw solution,
a second feed solution pump for delivery of the feed solution into the space C, and
a draw solution pump for delivery of the draw solution into the space D.

<Aspect 14>

The concentration system according to aspect 13, wherein the organic solvent removal device does not have the heat exchanger.

<Aspect 15>

The concentration system according to aspect 13, wherein the organic solvent removal device has the heat exchanger.

[ADVANTAGEOUS EFFECTS OF INVENTION]

According to the invention it is possible to efficiently remove the organic solvent from a feed solution comprising water and an organic solvent as the solvent, without producing degenerated or inactivated valuable substances. The method of the invention is based on membrane distillation, but with a lower development rate for wetting of the membrane distillation membrane, thus allowing the method to be carried out continuously for prolonged periods in a stable manner.

BRIEF DESCRIPTION OF DRAWINGS

Fig. 1 is a simplified cross-sectional view showing an example of the construction of a membrane module for membrane distillation to be used in the organic solvent removal method of the invention.
Fig. 2 is a schematic diagram showing an example of the construction of an organic solvent removal device of the invention.
Fig. 3 is a graph showing time-dependent change in feed solution tank mass (kg), average flux (kg/(m$^2$ × h)), absorbing solution electric conductivity ($\mu$S/cm), feed solution temperature (°C) and temperature of the absorbing solution (°C), during operation for organic solvent removal in Example 1.
Fig. 4 is a simplified cross-sectional view showing another example of the construction of a membrane module for membrane distillation to be used in the organic solvent removal method of the invention.
Fig. 5 is a simplified cross-sectional view showing an example of the construction of a forward osmosis membrane module to be used in the concentration method of the invention.
Fig. 6 is a schematic diagram showing an example of the construction of a concentration system of the invention.

DESCRIPTION OF EMBODIMENTS

<Organic solvent removal method>

The organic solvent removal method of the invention is an organic solvent removal method in which a feed solution comprising a solute, an organic solvent and water, and an absorbing solution, are contacted through a hydrophobic porous membrane, causing the organic solvent in the feed solution to move into the absorbing solution, wherein:

the absorbing solution may contain or not contain an organic solvent of the same type as the organic solvent in the feed solution,
the vapor pressure of the organic solvent in the feed solution at 25°C is 0.60 kPa or higher,
the temperature of the feed solution that contacts with the hydrophobic porous membrane is 40°C or lower,
the temperature of the absorbing solution that contacts with the hydrophobic porous membrane is 5°C or higher,
the temperature difference between the feed solution and the absorbing solution is 10°C or lower, and
the vapor pressure of the organic solvent in the feed solution that contacts with the hydrophobic porous membrane is higher than the vapor pressure of the organic solvent in the absorbing solution that contacts with the hydrophobic porous membrane.

In the organic solvent removal method of the invention,

the vapor pressure of the organic solvent in the feed solution at 25°C is 0.60 kPa or higher, and
the vapor pressure of the organic solvent in the feed solution which contacts with the hydrophobic porous membrane is higher than the vapor pressure of the organic solvent in the absorbing solution that contacts with the hydrophobic porous membrane,

thereby allowing efficient removal of the organic solvent from the feed solution by membrane distillation.

The vapor pressure of the organic solvent in the feed solution at 25°C is preferably 0.8 kPa or higher, more preferably 1.0 kPa or higher, even more preferably 2.0 kPa or higher, yet more preferably 3.0 kPa or higher and especially preferably 4.0 kPa or higher, or it may even be 5.0 kPa or higher or 6.0 kPa or higher. The vapor pressure of the organic solvent in the feed solution at 25°C is preferably 20 kPa or lower.

A higher vapor pressure of the organic solvent in the feed solution at 25°C will aid movement of the organic solvent in the feed solution into the absorbing solution. At the same time, the concentration of organic solvent is lower near the boundary membrane on the feed solution side of the hydrophobic porous membrane, making it difficult for the feed solution to infiltrate into the hydrophobic porous membrane, and thus making wetting less likely to occur. When the organic solvent concentration is excessively high, on the other hand, the vapor pressure becomes excessively high and the feed solution can easily infiltrate into the hydrophobic porous membrane, and with prolonged operation the feed solution can potentially penetrate through the hydrophobic porous membrane.

From this viewpoint, the vapor pressure of the organic solvent in the feed solution at 25°C is preferably 0.60 kPa or higher and 20 kPa or lower.

As mentioned above, it is necessary for the vapor pressure of the organic solvent in the feed solution which contacts with the hydrophobic porous membrane to be higher than the vapor pressure of the organic solvent in the absorbing solution that contacts with the hydrophobic porous membrane. In this case the difference between the vapor pressure of the organic solvent in the feed solution and the vapor pressure of the organic solvent in the absorbing solution is preferably greater than 0 kPa and 15 kPa or less. The difference is greater than 0 kPa, and more preferably 1 kPa or greater, 3 kPa or greater, 5 kPa or greater or 7 kPa or greater, for more efficient membrane distillation.

The difference is also 15 kPa or less, and more preferably 12 kPa or less, 10 kPa or less, 9 kPa or less and 8 kPa or less, to help reduce wetting of the membrane distillation membrane.

The mechanism of action for this phenomenon is not fully understood, but the present inventors conjecture that a relationship exists between membrane distillation flux and wetting of the membrane distillation membrane.

In other words, excessively increasing membrane distillation flux results in an excessive amount of organic solvent vapor permeating the membrane. When this occurs, the amount of organic solvent vapor absorbed into the absorbing solution increases to an excessive degree, leading to local overly increased organic solvent concentration near the boundary between the hydrophobic porous membrane surface and the absorbing solution. This promotes wetting of the hydrophobic porous membrane from the absorbing solution side, potentially hindering prolonged operation, which may be undesirable.

It is conjectured that limiting the difference between the vapor pressure of the organic solvent in the feed solution and the vapor pressure of the organic solvent in the absorbing solution to within the aforementioned range, so as to avoid excessive increase in the membrane distillation flux, reduces progressive wetting of the membrane distillation membrane.

However, the present invention is not to be constrained by this interpretation.

The vapor pressures of the organic solvents in the feed solution and in the absorbing solution may be the measured values or calculated values. A method for calculating the vapor pressures of the organic solvents in the feed solution and in the absorbing solution will now be described.

In the organic solvent removal method of the invention, limiting the temperature of the feed solution to 40°C or lower reduces degeneration and inactivation of the valuable substance (solute) in the feed solution, while also inhibiting wetting of the hydrophobic porous membrane functioning as the membrane distillation membrane. The reason why limiting the temperature of the feed solution to 40°C or lower inhibits wetting of the membrane distillation membrane is not fully understood, but may be related to the membrane distillation flux (permeability).

Specifically, investigation by the present inventors has shown that a large membrane distillation flux tends to promote wetting of the membrane distillation membrane. Limiting the temperature of the feed solution, therefore, can inhibit wetting of the membrane distillation membrane.

In order to reliably inhibit degeneration and inactivation of the solute and wetting of the membrane distillation membrane, the temperature of the organic solvent is preferably 35°C or lower and more preferably 30°C or lower. The temperature of the feed solution only which contact with the hydrophobic porous membrane should be controlled at or below the temperature limit specified above for inhibiting wetting of the membrane. In addition, for avoiding the solute from degeneration and inactivation, it is preferred for the temperature of the feed solution supplied to the organic solvent removal system entire to be at or below the abovementioned temperature.

From the viewpoint of preventing freezing of the feed solution, maintaining low viscosity and ensuring suitable circulation of the feed solution, on the other hand, the temperature of the feed solution is preferably 5°C or higher, more preferably 10°C or higher and even 15°C or higher.

In the organic solvent removal method of the invention, limiting the temperature of the absorbing solution to 5°C or higher prevents freezing of the absorbing solution, maintains a low viscosity for the absorbing solution and ensures suitable circulation of the absorbing solution. There is no particular upper limit on the temperature of the absorbing solution, but the difference from the temperature of the feed solution must be 10°C or less. Limiting the temperature difference between the feed solution and absorbing solution to 10°C or less can avoid excessive increase in the membrane distillation flux and inhibit wetting of the membrane distillation membrane.

In the organic solvent removal method of the invention, limiting the respective linear speeds at which the feed solution and absorbing solution pass over the surface of the membrane distillation membrane allows longer operation of membrane distillation with higher efficiency. It is desirable for the feed solution to pass at a slower linear speed and for the absorbing solution to pass at a higher linear speed, over the surface of the membrane distillation membrane. This can provide advantages, including maintaining low liquid feed pressure for the feed solution, lengthening the contact time between the feed solution and membrane distillation membrane, increasing efficiency for permeation of the organic solvent vapor through the membrane distillation membrane, and rapidly renewing the absorbing solution near the membrane distillation membrane, to allow the membrane distillation flux to be maintained within a suitable range.

By increasing the efficiency for permeation of the organic solvent vapor through the membrane distillation membrane, it is possible to lower the organic solvent concentration of the feed solution and absorbing solution near the membrane distillation membrane, thus inhibiting wetting of the membrane distillation membrane.

From this viewpoint, the linear speed of the feed solution during passage over the surface of the membrane distillation membrane is preferably 50 cm/s or lower, more preferably 40 cm/s and even more preferably 30 cm/s or lower. The linear speed of the feed solution may also be 5 cm/s or greater or 10 cm/s or greater, from the viewpoint of ensuring membrane distillation efficiency.

The linear speed of the absorbing solution during passage over the surface of the membrane distillation membrane is preferably 1.0 cm/s or greater, more preferably 2.0 cm/s or greater, even more preferably 3.0 cm/s or greater and especially 5.0 cm/s or greater. The linear speed of the absorbing solution may be 15 cm/s or lower or 10 cm/s or lower from the viewpoint of avoiding excessive increase in the liquid feed pressure.

The flow rates of the feed solution and absorbing solution when passing over the surface of the membrane distillation membrane are the values calculated by the following formula (1).

$$\text{Linear speed (cm/s)} = \text{Liquid flow rate of liquid feed pump (cm}^3\text{/s)/cross-sectional area of liquid passage section (cm}^2) \tag{1}$$

For example, when the membrane distillation membrane is a hollow fiber membrane and the membrane distillation is to be carried out using a membrane module comprising a plurality of hollow fiber membranes housed in the housing of a cylindrical housing, the cross-sectional area of the liquid passage section for liquid passing through the hollow sections of the hollow fibers can be calculated as the cross-sectional area of the hollow sections using formula (2), while the cross-sectional area of the liquid passage section for liquid passing over the outsides of the hollow fibers can be calculated as the cross-sectional area of the outside sections using formula (3).

$$\text{Cross-sectional area of hollow sections (cm}^2) = \pi \times \{\text{inner diameter of hollow fibers (cm)/2}\}^2 \times \text{number of hollow fiber membranes} \tag{2}$$

$$\text{Cross-sectional area of outside sections (cm}^2) = \pi \times \{\text{inner diameter of housing (cm)/2}\}^2 - \pi \times [\{\text{outer diameter of hollow fibers (cm)/2}\}^2 \times \text{number of hollow fiber membranes}] \tag{3}$$

<Calculation of vapor pressures of organic solvents in feed solution and in absorbing solution>

The vapor pressures of the organic solvents in the feed solution and in the absorbing solution may be the measured values or they may be determined by calculation.

When the vapor pressures of the organic solvents in the feed solution and in the absorbing solution are to be determined by calculation, the following procedure may be used. This procedure assumes that the feed solution and absorbing solution are both at 25°C, but the vapor pressure of the organic solvent in each solution when in contact with the membrane distillation membrane can be calculated in the same manner, with the temperature of "25°C" being interpreted as the temperature when in contact with the membrane distillation membrane.

(1) The vapor pressure at 25°C when the organic solvent is a pure substance, is calculated by the Antoine formula.
(2) The activity coefficient of the organic solvent in the feed solution and the absorbing solution is calculated using the Wilson coefficient.
(3) The vapor pressure of the organic solvent in each solution is calculated according to Raoult's law, based on the vapor pressure at 25°C when the organic solvent is a pure substance, calculated in (1) above, the molar fraction of the organic solvent, and the activity coefficient of the organic solvent in the feed solution and absorbing solution as calculated in (2) above.

These will now be explained in order.

(1) The vapor pressure at 25°C, when the organic solvent is a pure substance, is calculated by the Antoine formula.

The vapor pressure $P_i^0$ at 25°C when the organic solvent is a pure substance is a coefficient unique to the organic solvent, and is determined from the Antoine formula represented by the following formula (4).
[Mathematical Formula 1]

$$log\left(P_i^0\right) = \left(A_i - \frac{B_i}{T + C_i}\right) \qquad (4)$$

In formula (4), $A_i$, $B_i$ and $C_i$ are coefficients unique to the solvent (component i), the values for ethanol, acetonitrile and water being the following values published by the National Institute of Standards and Technology, and the value for isopropanol being disclosed in Membranes 2021, 11, 347.

[Table 1]

| Source | National Institute Of Standards and Technology Co. | | | Membranes 2021, 11, 347. |
|---|---|---|---|---|
| Component i | Ethanol | Acetonitrile | Water | Isopropanol |
| A | 5.93296 | 5.37229 | 5.40221 | 6.6604 |
| B | 2345.829 | 1670.409 | 1838.675 | 813.055 |
| C | 43.815 | -40.191 | -31.737 | 132.93 |

For the values from the National Institute of Standards and Technology, T in formula (4) is absolute temperature and the units for $P_i^0$ are bar. For the value in Membranes 2021, 11, 347, T in formula (4) is Celsius temperature, and the units for $P_i^0$ are mmHg.
(2) The activity coefficient of the organic solvent in the feed solution and the absorbing solution is calculated using the Wilson coefficient.
The activity coefficient $\gamma_i$ of the organic solvent in both the feed solution and the absorbing solution is determined using the following formula (5), assuming that the feed solution and absorbing solution are both mixed solvents, as azeotropic mixtures of an organic solvent (component i) and water (component j).
[Mathematical Formula 2]

$$\ln\gamma_i = -\ln(\chi_i + \Lambda_{ij}\chi_j) + \chi_j\left(\frac{\Lambda_{ij}}{\chi_i + \Lambda_{ij}\chi_j} - \frac{\Lambda_{ji}}{\Lambda_{ji}\chi_i + \chi_j}\right) \qquad (5)$$

In formula (5), $\Lambda_{ij}$ and $\Lambda_{ji}$ are the Wilson coefficients for the mixed solvents, as azeotropic mixtures of an organic solvent (component i) and water (component j), and either documented values or values calculated by the following formulas (6) and (7) may be used.
[Mathematical Formula 3]

$$\Lambda_{ij} = exp\left(a_{ij} + \frac{b_{ij}}{T}\right) \qquad (6)$$

$$\Lambda_{ji} = exp\left(a_{ji} + \frac{b_{ji}}{T}\right) \qquad (7)$$

In formulas (6) and (7), $a_{ij}$, $a_{ji}$, $b_{ij}$ and $b_{ji}$ are coefficients determined by experimentation, and their values for an ethanol aqueous solution and an acetonitrile aqueous solution have been published by Aspen Technology Inc.

[Table 2]

| Component i | Ethanol | Acetonitrile |
|---|---|---|
| Component j | Water | Water |
| $a_{ij}$ | -2.5035 | -0.8487 |
| $a_{ji}$ | -0.0503 | 1.0158 |
| $b_{ij}$ | 346.151 | -386.606 |
| $b_{ji}$ | -69.6372 | -707.346 |

The symbol T in formulas (6) and (7) represents absolute temperature.

For an isopropanol aqueous solution, $\Lambda_{ij}$ and $\Lambda_{ji}$ in formula (5) have the following values published in Membranes 2021, 11, 347.

Aij:0.04857
Aji:0.77714

(3) The vapor pressure of the organic solvent in each solution is calculated according to Raoult's law, based on the vapor pressure at 25°C when the organic solvents in the feed solution and absorbing solution are pure substances, calculated in (1) above, the molar fraction of the organic solvent, and the activity coefficient of the organic solvent in the feed solution and absorbing solution as calculated in (2) above.

Using the vapor pressure $P_i^0$ determined in (1) above, the molar fractions $\chi_i$ of the organic solvents in the feed solution and absorbing solution, and the activity coefficient $\gamma_i$ determined in (2) above, the vapor pressure $P_i$ for the organic solvents of the feed solution and absorbing solution are each determined according to Raoult's law represented by formula (8).

$$P_i = P_i^0 \times \chi_i \times \gamma_i \quad (8)$$

The feed solution, absorbing solution and membrane distillation membrane (hydrophobic porous membrane) to be used in the organic solvent removal method of the invention will now be described in order.

<Feed solution>

The feed solution to be used in the organic solvent removal method of the invention is not particularly restricted so long as it is a solution or dispersion comprising the solute and solvent. In the organic solvent removal method of the invention, however, removal of the organic solvent is carried out while limiting the temperature of the feed solution to 40°C or lower, and its use is therefore effective for feed solutions that should not be heated.

(Solute)

Considering the advantage of the invention whereby organic solvent removal is carried out by limiting the temperature of the feed solution to 40°C or lower, the invention is effective when applied to solutions or dispersions that contain, as solutes, valuable substances that may decompose under heating, and particularly pharmaceutical raw materials, pharmaceutical bulk materials and pharmaceutical intermediate substances (collectively referred to hereunder as "pharmaceutical raw materials").

Examples of such pharmaceutical raw materials include those with useful substances selected from the group consisting of amino acids, peptides, proteins, sugars, vaccines, nucleic acids, antibiotics and vitamins as solutes, and preferably the solutes are dissolved or dispersed in a suitable solvent.

Amino acids are compounds having one amino acid backbone and comprising a carboxyl group and an amino group, and a portion linking them. For the purpose of the invention, amino acids include essential amino acids, non-essential amino acids and non-natural amino acids.

Examples of essential amino acids include tryptophan, lysine, methionine, phenylalanine, threonine, valine, leucine and isoleucine. Examples of non-essential amino acids include arginine, glycine, alanine, serine, tyrosine, cysteine, asparagine, glutamine, proline, aspartic acid and glutamic acid.

A non-natural amino acid is any compound that has an amino acid backbone in the molecule and that is artificial and not found in nature. However, a non-natural amino acid used as a solute for a pharmaceutical raw material may be obtained by bonding a desired labeling compound to an amino acid backbone. Examples of labeling compounds include pigments, fluorescent substances, luminescent substances, enzyme substrates, coenzymes, antigenic substances and protein binding substances.

Examples of preferred non-natural amino acids as solutes for pharmaceutical raw materials include labeled amino acids and functionalized amino acids.

Labeled amino acids are non-natural amino acids comprising an amino acid backbone and a labeling compound bonded together, specific examples of which include amino acids having an amino acid backbone containing an aromatic ring on a side chain, bonded to a labeling compound.

Functionalized amino acids include photo-responsive amino acids, photo-switchable amino acids, fluorogenic probe amino acids and fluorescent-labeled amino acids.

Peptides are compounds having amino acid residues of at least 2 and less than 70 residues bonded together, either in a linear or cyclic fashion. Examples of peptides include L-alanyl-L-glutamine, $\beta$-alanyl-L-histidine cyclosporin and glutathione.

Proteins are generally amino acid residue-bonded compounds having longer chain lengths than peptides. Proteins for the purpose of the invention are preferably those applied in protein preparations.

Examples of protein preparations include interferon-$\alpha$, interferon-$\beta$, interleukin-1 to 12, growth hormones, erythropoietin, insulin, granulocyte colony-stimulating factor (G-CSF), tissue plasminogen activator (TPA), sodium diuretic peptide, blood clotting factor VIII, somatomedin, glucagon, growth hormone releasing factor, serum albumin and calcitonin.

Examples of sugars include monosaccharides, disaccharides, sugar chains (excluding disaccharides) and sugar chain derivatives.

Examples of monosaccharides include glucose, fructose, galactose, mannose, ribose and deoxyribose. Examples of disaccharides include maltose, sucrose and lactose.

For the purpose of the invention, "sugar chain" excludes the concept of disaccharides, and examples are glucose, galactose, mannose, fucose, xylose, glucuronic acid and iduronic acid. Examples of sugar chain derivatives include sugar derivatives such as N-acetylglucosamine, N-acetylgalactosamine and N-acetylneuraminic acid.

Examples of vaccines include hepatitis A vaccine, hepatitis B vaccine and hepatitis C vaccine,

examples of nucleic acids include oligonucleotides, RNA, aptamers and decoys, and
examples of antibiotics include streptomycin and vancomycin.

Examples of vitamins include the vitamin A group, vitamin B group and vitamin C group, including their derivatives and salts. The vitamin B group includes vitamin B6 and vitamin B 12, for example.

The number-average molecular weight of a solute in the feed solution may be about 100 to 50,000, preferably about 100 to 30,000, more preferably about 100 to 10,000, and especially preferably 100 to 6,000.

If the molecular weight of the solute is too low, it may permeate through the semi-permeable membrane of forward osmosis and membrane distillation, and if the molecular weight is too high the solute may adhere onto the membrane surface, which is also undesirable.

The solute in the feed solution of the invention preferably consists of one or more selected from the group consisting of amino acids, peptides, proteins, sugars, vaccines, nucleic acids, antibiotics, antibody-drug conjugates (ADC) and vitamins.

The solute in the feed solution to be used in the organic solvent removal method of the invention may be the pharmaceutical raw material alone, or the pharmaceutical raw material together with another non-volatile solute. Examples of non-volatile solutes include inorganic salts. Examples of inorganic salts include sodium chloride, potassium chloride, calcium chloride, calcium carbonate, potassium nitrate and potassium sulfate.

<Solvent>

The solvent of the feed solution of the invention comprises an organic solvent and water.

The organic solvent in the solvent of the feed solution is preferably a water-soluble organic solvent.

Examples of such water-soluble organic solvents include carboxylic acids, ethers, alcohols, glycols, amines, amides and nitriles.

Specific examples of these include carboxylic acids such as acetic acid;

ethers such as tetrahydrofuran, dioxane, 1,2-diethoxyethane and diethyleneglycol diethyl ether;
alcohols such as methanol, ethanol and isopropanol;
glycols such as ethylene glycol, propylene glycol and t-butyl alcohol;
amines such as pyridine;
amides such as triamide hexamethyl phosphate; and
nitriles such as acetonitrile.

The organic solvent will typically be an alcohol or a nitrile, or a mixture thereof.

The percentage of the organic solvent in the solvent of the feed solution may be, for example, 10 mass% or greater, 15 mass% or greater, 20 mass% or greater, 25 mass% or greater or 30 mass% or greater, and 70 mass% or lower, 60 mass% or lower, 55 mass% or lower, 50 mass% or lower, 45 mass% or lower or 40 mass% or lower.

<Concentration, viscosity and surface tension of feed solution>

The concentration of the solute in the feed solution may be arbitrary. In consideration of solubility of the solute and of medium-term stability of operation for removal of the solvent, however, the percentage of the solute with respect to the total amount of the feed solution may be in the range of 10 ppm or greater, and 10.0 mass% or lower.

The viscosity of the feed solution is preferably adjusted to a suitable range from the viewpoint of inhibiting wetting of the membrane distillation membrane. Specifically, an excessively low feed solution viscosity can result in excessive decrease in interfacial tension between the feed solution and the membrane distillation membrane, causing wetting of the membrane distillation membrane. An excessively high feed solution viscosity, on the other hand, requires high liquid feed pressure of the feed solution, and if the liquid feed pressure exceeds the Liquid Entry Pressure (LEP) of the membrane distillation membrane, this can cause wetting of the membrane distillation membrane.

From this viewpoint, the viscosity of the feed solution is preferably 0.2 mPa·s or higher and 1,000 mPa·s or lower, and more preferably 0.4 mPa·s or higher and 700 mPa·s or lower.

The surface tension of the feed solution is preferably high from the viewpoint of inhibiting wetting of the membrane distillation membrane. The surface tension of the feed solution is preferably 20 dyne/cm or greater, more preferably 25 dyne/cm or greater, even more preferably 28 dyne/cm or greater and especially preferably 30 dyne/cm or greater.

<Absorbing solution>

The absorbing solution used in the organic solvent removal method of the invention is a liquid having the property of incorporating an organic solvent that has flowed in contact with the feed solution through the membrane distillation membrane, thereby volatilizing from the feed solution and permeating the membrane distillation membrane.

The absorbing solution used in the organic solvent removal method of the invention will typically be water or a mixture of water and an organic solvent. The organic solvent in the absorbing solution may be of the same type as the organic solvent in the solvent of the feed solution. If an organic solvent of the same type as the organic solvent in the feed solution is included in the absorbing solution, it will often be easier for the difference between the vapor pressure of the organic solvent in the feed solution and the vapor pressure of the organic solvent in the absorbing solution to be set to the predetermined value. This aspect is also encompassed among the preferred aspects of the organic solvent removal method of the invention.

The viscosity of the absorbing solution is preferably 0.2 mPa·s or higher and 1,000 mPa·s or lower, and more preferably 0.4 mPa·s or higher and 700 mPa·s or lower.

The surface tension of the absorbing solution is preferably high from the viewpoint of inhibiting wetting of the membrane distillation membrane. The surface tension of the absorbing solution is preferably 20 dyne/cm or greater, more preferably 25 dyne/cm or greater, even more preferably 28 dyne/cm or greater and especially preferably 30 dyne/cm or greater.

<Membrane distillation membrane>

According to the invention, a feed solution and an absorbing solution are contacted through a hydrophobic porous membrane which functions as a membrane distillation membrane, and the difference between the vapor pressure of the organic solvent in the feed solution and the vapor pressure of the organic solvent in the absorbing solution is used as the driving force to cause vapor of the organic solvent that has evaporated from the feed solution to migrate through the hydrophobic porous membrane into the absorbing solution, thereby removing the organic solvent from the feed solution.

Therefore, the hydrophobic porous membrane used as the membrane distillation membrane must allow only vapor of the organic solvent in the feed solution to penetrate through, without allowing liquid (typically the feed solution itself) to penetrate through. In the case of a feed solution with a high proportion of organic solvent in the solvent of the feed solution, the low surface tension of the feed solution causes the feed solution to infiltrate into the pores of the hydrophobic porous membrane, with the feed solution flowing directly to the absorbing solution side, producing the phenomenon of "wetting". Wetting results in loss of function of the hydrophobic porous membrane as a membrane distillation membrane. In order to avoid this situation, the hydrophobic porous membrane is preferably a highly hydrophobic membrane.

Water contact angle and liquid entry pressure (LEP) are used as indexes representing the hydrophobicity of a membrane.

Evaluation of membrane hydrophobicity based on water contact angle is evaluation of the hydrophobicity of the membrane based on the contact angle between the membrane and a water droplet placed on the surface of the membrane. The water contact angle of the hydrophobic porous membrane used for the invention is preferably 90° or greater, more preferably 110° and even more preferably 120° or greater. There is no upper limit on the water contact angle, but the upper limit is realistically about 150°. A membrane with a water contact angle exceeding this upper limit can potentially cause leakage in the module, due to insufficient adhesion with the adhesive that is preferably used to anchor the membrane distillation membrane to the housing of the membrane module for membrane distillation.

Evaluation of membrane hydrophobicity based on liquid entry pressure (LEP) is evaluation of the hydrophobicity of the membrane based on the pressure necessary for the liquid to enter by external pressure onto the membrane surface, which is essentially resistant to wetting. Evaluation of the hydrophobicity of the membrane based on LEP is carried out by a method suited for using a membrane distillation membrane as a membrane module for membrane distillation. The method of evaluating the hydrophobicity of the membrane based on LEP will therefore be described below in regard to the membrane module for membrane distillation.

The organic solvent removal method of the invention is preferably carried out at a temperature of 5°C or higher and 40°C or lower. The distillation is therefore carried out at a lower vapor pressure than for normal distillation. It is therefore preferred for the hydrophobic porous membrane used as the membrane distillation membrane for the invention to have low permeation resistance for vapor.

From this viewpoint, the pores of the hydrophobic porous membrane are preferably as large as possible within a range that avoids wetting, the average pore diameter being preferably in the range of 0.02 $\mu$m or larger and 0.5 $\mu$m or smaller, and more preferably 0.05 $\mu$m or larger and 0.3 $\mu$m or smaller. If the average pore diameter of the hydrophobic porous membrane is smaller than 0.02 $\mu$m, the vapor permeation resistance will be too high, requiring a longer organic solvent removal time. If the value is smaller than 0.5 $\mu$m, on the other hand, wetting will be more likely to occur, and it may also be impossible to stably carry out organic solvent removal.

From the viewpoint of obtaining high vapor permeability, the porosity of the hydrophobic porous membrane is preferably 60% or greater and more preferably 70% or greater, while from the viewpoint of satisfactorily maintaining strength for the membrane itself and helping to prevent problems such as fracturing during prolonged use, it is preferably 90% or lower and more preferably 85% or lower.

The materials of the hydrophobic porous membrane preferably include one or more resins selected from the group consisting of polysulfone, polyethersulfone, polyethylene, polypropylene, polyvinylidene fluoride, polytetrafluoroethylene, ethylene-ethylene tetrafluoride copolymer and polychlorotrifluoroethylene. From the viewpoint of hydrophobicity, film formability, and mechanical and thermal durability, preferred materials are selected from among polyvinylidene fluoride, ethylene·ethylene tetrafluoride copolymer and

polychlorotrifluoroethylene.

For further improved hydrophobicity of the hydrophobic porous membrane, a hydrophobic polymer may be added to at least part of the hydrophobic porous membrane. The hydrophobic polymer may be a polymer with a hydrophobic structure. The hydrophobic structure may be a non-polar group, low polar group, non-polar backbone or low polar backbone. Examples of non-polar groups or low polar groups include hydrocarbon groups and fluorine-containing groups, and examples of non-polar backbones or low-polar backbones include hydrocarbon main chains and siloxane main chains.

Examples of such hydrophobic polymers include polymers with siloxane bonds, and fluorine atom-containing polymers. More specific examples include the following:

(a) Polymers with siloxane bonds, such as dimethylsilicone gels, methylphenylsilicone gels, reactive modified silicone gels with organic functional groups (such as amino and fluoroalkyl groups), and silicone-based polymers that react with silane coupling agents to form a crosslinked structure, as well as polymer gels that are crosslinked products of the foregoing.

(b) Fluorine atom-containing polymers, such as polymers having fluorine atom-containing groups on side chains, where the fluorine atom-containing groups are (per)fluoroalkyl groups, (per)fluoropolyether groups, alkylsilyl groups or fluorosilyl groups.

Particularly preferred as hydrophobic polymers are polymers of one or more selected from among (meth) acrylate-based monomers and vinyl-based monomers having one or more groups selected from among 1 to 12 carbon atoms (per)fluoroalkyl and (per)fluoropolyether groups.

The hydrophobic porous membrane may have any shape, such as a hollow fiber membrane shape, a tubular shape or a flat membrane shape. A hollow fiber hydrophobic porous membrane is suitable as it allows formation of a flow channel for passage of the feed solution and absorbing solution, without using a spacer, and allows uniform concentration to be carried out.

The membrane thickness of a hollow fiber hydrophobic porous membrane, when used, is preferably 10 $\mu$m or greater and 1,000 $\mu$m or lower, and more preferably 20 $\mu$m or greater and 500 $\mu$m or lower, from the viewpoint of both vapor permeability and the mechanical strength of the membrane. A membrane thickness of 1,000 $\mu$m or smaller can provide high vapor permeability, while a membrane thickness of 10 $\mu$m or greater will allow the membrane to be used without deformation.

The outer diameter of the hollow fiber hydrophobic porous membrane is preferably 300 $\mu$m or larger and 5,000 $\mu$m or smaller and more preferably 350 $\mu$m or larger and 4,000 $\mu$m or smaller, and the inner diameter is preferably 200 $\mu$m or larger and 4,000 $\mu$m or smaller and more preferably 250 $\mu$m or larger and 3,000 $\mu$m or smaller. If the hollow fiber membrane has a size within this range, the balance between membrane strength and effective area will be satisfactory.

According to the invention, the hydrophobic porous membrane is preferably used in the form of a membrane module for membrane distillation having a plurality of hydrophobic porous membranes housed in a suitable housing.

Most preferably, it is a membrane module for membrane distillation wherein a plurality of hollow fiber hydrophobic porous membranes are housed in a cylindrical housing with the lengthwise directions of the hollow fibers arranged essentially parallel to the axial direction of the housing, and with both ends of the hollow fibers anchored with an adhesive resin, but with both ends of the hollow fibers being open and not closed off by the adhesive resin.

The interior of the membrane module for membrane distillation is divided by the hydrophobic porous membranes into spaces on the hollow section sides of the hydrophobic porous membranes, and spaces on the exterior space sides of the hydrophobic porous membranes.

Evaluation of the hydrophobicity of a membrane by liquid entry pressure (LEP) is carried out by filling the interior of the membrane module for membrane distillation with a liquid into both spaces separated by the hydrophobic porous membrane, and measuring the pressure required for the liquid to permeate the hydrophobic porous membrane and leak out to the other space, when one space is pressurized (liquid entry pressure (LEP)). A higher LEP can be evaluated as higher hydrophobicity of the membrane.

The LEP of the hydrophobic porous membrane is preferably 100 kPa or higher, 170 kPa or higher, 180 kPa or higher, 190 kPa or higher or 200 kPa or higher, in order to inhibit wetting of the membrane during operation. From the viewpoint of pressure resistance of the hydrophobic porous membrane and the module housing, a LEP of 350 kPa is preferred. If the LEP of the hydrophobic porous membrane is within this range, it will be less likely to undergo wetting even with liquids having low interfacial tension, thus facilitating stable operation for prolonged periods.

The LEP is preferably measured by filling the liquid at both spaces separated by the hydrophobic porous membrane, and pressurizing the space on the feed solution side of the hydrophobic porous membrane.

The liquid used for LEP measurement may be a 20 mass% ethanol aqueous solution, for example.

During LEP measurement, the pressure in the space on the filling side may be increased 10 kPa at a time, for example, judging the LEP to be the maximum pressure such that the liquid permeation volume does not exceed a predetermined threshold during 10 minutes, following a period of having been maintained for 90 minutes. The threshold used may be a value of 0.05 L/(m$^2$ × h) as the liquid leakage volume per measuring time (10 minutes) per effective membrane area of the hydrophobic porous membrane.

Particularly preferred examples of the membrane module for membrane distillation of the invention will now be described with reference to the accompanying drawings.

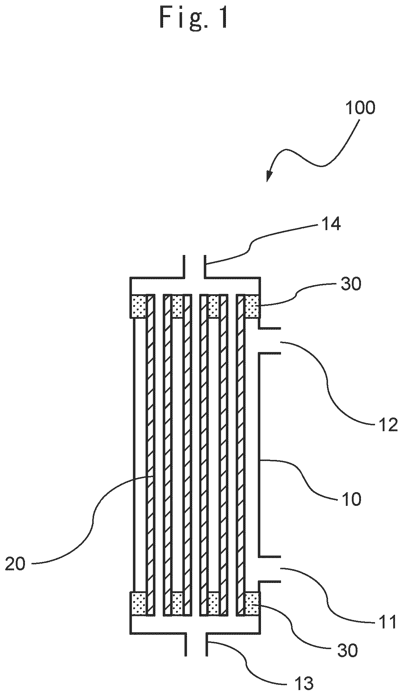

Fig. 1 is a simplified cross-sectional view showing an example of the construction of a membrane module for membrane distillation to be used in the organic solvent removal method of the invention.

The membrane module for membrane distillation (100) of Fig. 1 has a plurality of hollow fiber hydrophobic porous membranes (20) housed in a housing (10), with both ends thereof adhesively anchored by an adhesive resin (30). Both ends of each hydrophobic porous membrane (20) are open without being closed off.

The sides of the housing (10) have a first housing side tube (11) for inflow of an absorbing solution (Ab) and a second housing side tube (12) for discharge of the absorbing solution (Ab), which allow the absorbing solution (Ab) to circulate through the exterior space of the hydrophobic porous membrane (20).

At both ends in the axial direction of the housing (10) (the up-down direction in Fig. 1) there are provided a lower opening (13) for inflow of a feed solution (FS) and an upper opening (14) for outflow of the feed solution (FS), which allow the feed solution (FS) to be circulated through the hollow section of the hydrophobic porous membrane (20).

The interior of the membrane module for membrane distillation (100) is divided by the hydrophobic porous membrane (20) into a space A on the hollow section side of the hydrophobic porous membrane (20), and a space B on the exterior space side of the hydrophobic porous membrane (20). The two spaces are blocked from mutual flow, except that vapor of the organic solvent can penetrate through the external walls of the hydrophobic porous membranes (20).

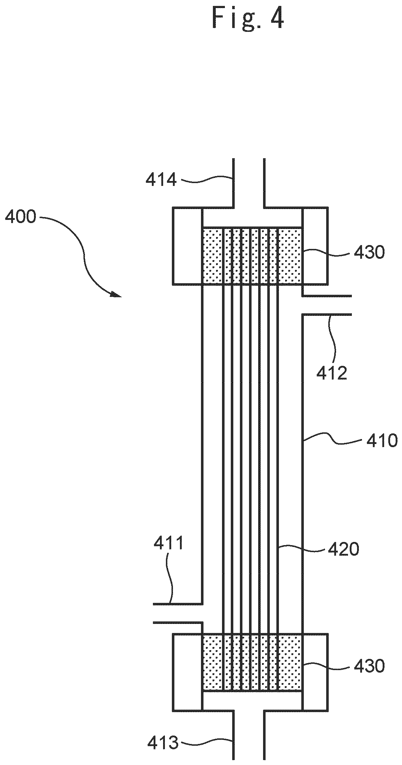

Fig. 4 is a simplified cross-sectional view showing another example of the construction of a membrane module for membrane distillation to be used in the organic solvent removal method of the invention. The membrane module for membrane distillation of Fig. 4 is an example of a large-sized membrane module for membrane distillation suitable for large scale organic solvent removal.

The membrane module for membrane distillation (400) of Fig. 4 has a plurality of hollow fiber hydrophobic porous membranes (420) housed in a housing (410), with both ends thereof adhesively anchored by an adhesive resin (430). Both ends of each hydrophobic porous membrane (420) are open without being closed off.

The sides of the housing (410) have a first housing side tube (411) for inflow of an absorbing solution (Ab) and a second housing side tube (412) for discharge of the absorbing solution (Ab), which allow the absorbing solution (Ab) to circulate through the exterior space of the hydrophobic porous membrane (420).

At the respective ends in the axial direction of the housing (410) (the up-down direction in Fig. 4) there are provided a bottom header having a lower opening (413) for inflow of a feed solution (FS) and a top header having an upper opening (414) for outflow of the feed solution (FS), which allow the feed solution (FS) to be circulated through the hollow section of the hydrophobic porous membrane (420).

The interior of the large-sized membrane module for membrane distillation (400) is divided by the hydrophobic porous membrane (420) into a space A on the hollow section side of the hydrophobic porous membrane (420), and a space B on the exterior space side of the hydrophobic porous membrane (420). The two spaces are blocked from mutual flow, except that vapor of the organic solvent can penetrate through the external walls of the hydrophobic porous membranes (420).

<Organic solvent removal device>

Another aspect of the invention provides an organic solvent removal device.

The organic solvent removal device of the invention comprises:

a membrane module for membrane distillation having a hydrophobic porous membrane, a space A for contact of the feed solution with one side of the hydrophobic porous membrane, and a space B for contact of the absorbing solution with the other side of the hydrophobic porous membrane,
a feed solution pump for delivery of the feed solution to the space A, and
an absorbing solution pump for delivery of the absorbing solution to the space B,
wherein the organic solvent removal device may have or not have a heat exchanger in the tubing for delivery of the feed solution, and
when the organic solvent removal device has a heat exchanger, the value of the effective area of the heat exchanger divided by the effective membrane area of the membrane module for membrane distillation is 1.5 or lower.

The "membrane module for membrane distillation" is not part of the "tubing system" mentioned here. The membrane module for membrane distillation does not need to have a heating apparatus such as a heat exchanger or heater.

The organic solvent removal device of the invention may also have one or more selected from among a feed solution tank for holding of the feed solution, an absorbing solution tank for holding of the absorbing solution, a feed solution tubing system for delivery of the feed solution, and an absorbing solution tubing system for delivery of the absorbing solution.

The feed solution tubing system includes a feed solution supply tube for delivery of the feed solution held in the feed solution tank to the membrane module for membrane distillation, and a feed solution return tube for return of the feed solution that has passed through the membrane module for membrane distillation and has had the organic solvent removed, back to the feed solution tank. The absorbing solution tubing system includes an absorbing solution supply tube for delivery of the absorbing solution held in the absorbing solution tank to the membrane module for membrane distillation, and an absorbing solution return tube for return of the absorbing solution that has passed through the membrane module for membrane distillation and has incorporated the organic solvent, back to the absorbing solution tank.

The organic solvent removal device of the invention may have a heat exchanger in the feed solution tubing system, or it may lack such a heat exchanger.

The term "heat exchanger" here refers to a heater having the function of causing contact between a feed solution and heating medium across a partition, so that the heat of the heating medium moves into the feed solution. Examples include a shell tube (double tube) heat exchanger, a plate-type heat exchanger, a double tube heat exchanger, and a spiral-type heat exchanger. Membrane modules, such as the membrane module for membrane distillation and the forward osmosis membrane module described below, are not encompassed by the term "heat exchanger".

When such a heat exchanger is used, a local portion of the feed solution is excessively heated, often causing degeneration and inactivation of the solute (valuable substance). The heat exchanger will usually have the flow channel of the feed solution in a complex geometrical form in order to increase the contact area between the feed solution and the heating medium, but this can potentially cause pooling of the feed solution and consequent reduction in product yield.

In order to avoid such a situation, the organic solvent removal device of the invention preferably does not have a heat exchanger in the feed solution tubing system, or if it does have a heat exchanger in the feed solution tubing system, it preferably satisfies at least one and preferably both of the following conditions (A) and (B).

(A) The ratio of the effective area of the heat exchanger (the contact area between the feed solution and the heating medium) with respect to the total membrane area of the membrane module for membrane distillation is 1.5 or lower, 1.2 or lower, 1.0 or lower, 0.8 or lower, 0.5 or lower or 0.3 or lower, and

(B) The difference between the temperature of the heating medium passing through the heat exchanger and the set temperature of the feed solution introduced into the membrane module for membrane distillation is kept to 10°C or less, 8°C or less, 5°C or less or 3°C or less.

For condition (A), the reference of the contact area between the feed solution and the heating medium is the total membrane area of the membrane module for membrane distillation because the total membrane area of the membrane module for membrane distillation can serve as an index of the scale of the organic solvent removal device.

Even if a temperature control jacket is provided on the feed solution tank and the heating medium is flowed through the jacket, since the contact area of the temperature control jacket with the heating medium is much smaller than the amount of housed feed solution and the presence of the jacket produces a complex shape on the inner wall on the feed solution side, a temperature control jacket on the feed solution tank is not considered to be a "heat exchanger" as described here. However, the difference between the temperature of the heating medium flowing through the temperature control jacket and the set temperature of the feed solution introduced into the membrane module for membrane distillation is preferably kept to 10°C or less, 8°C or less, 5°C or less or 3°C or less.

When the organic solvent removal device of the invention does not have a heat exchanger, or when it does have a heat exchanger but the effective area of the heat exchanger is smaller than predetermined value and/or the temperature difference between the feed solution and the heating medium is small, the following advantages may be obtained.

Degeneration of the solute in the feed solution is inhibited; and flux of the membrane distillation membrane is adjusted within a suitable range, helping to prevent local increase in organic solvent concentration near the boundary between the surface of the hydrophobic porous membrane and the absorbing solution, and allowing stable operation to be carried out for prolonged periods.

Such an organic solvent removal device can be suitably used to carry out the organic dissolving removal method of the invention.

An especially preferred example of one aspect of the organic solvent removal device of the invention will now be explained with reference to the accompanying drawings.

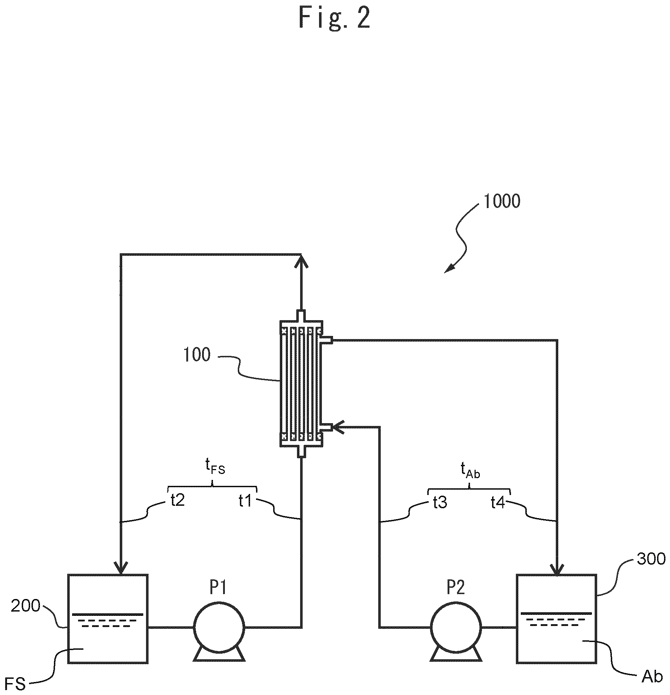

Fig. 2 is a schematic diagram showing an example of the construction of an organic solvent removal device of the invention.

The organic solvent removal device (1000) of Fig. 2 has a membrane module for membrane distillation (100), a feed solution tank (200) and an absorbing solution tank (300), with the feed solution tank (200) and membrane module for membrane distillation (100) being connected by a feed solution tubing system ($t_{FS}$) between them, and the absorbing solution tank (300) and membrane module for membrane distillation (100) being connected by an absorbing solution tubing system (tAb) between them.

The feed solution tubing system ($t_{FS}$) includes a feed solution supply tube (t1) connecting the feed solution tank (200) with the lower opening of the membrane module for membrane distillation (100), and a feed solution return tube (t2) connecting the upper opening of the membrane module for membrane distillation (100) with the feed solution tank (200). The absorbing solution tubing system (tAb) includes an absorbing solution supply tube (t3) connecting the absorbing solution tank (300) with the first housing side tube of the membrane module for membrane distillation (100), and an absorbing solution return tube (t4) connecting the second housing side tube of the membrane module for membrane distillation (100) with the absorbing solution tank (300).

In the feed solution tubing system ($t_{FS}$), a feed solution pump (P1) is provided for delivery of the feed solution (FS), while in the absorbing solution tubing system (tAb) an absorbing solution pump (P2) is provided for delivery of the absorbing solution (Ab).

The feed solution (FS) housed in the feed solution tank (200) is brought to the lower opening of the membrane module for membrane distillation (100) through the feed solution supply tube (t1) by the feed solution pump (P1), and passes through the space A on the insides of the hollow fiber hydrophobic porous membranes while being discharged from the upper opening of the membrane module for membrane distillation (100), and returning to the feed solution tank (200) through the feed solution return tube (t2).

The absorbing solution (Ab) housed in the absorbing solution tank (300), on the other hand, is brought to the first housing side tube of the membrane module for membrane distillation (100) through the absorbing solution supply tube (t3) by the absorbing solution pump (P2), and passes through the space B on the outsides of the hollow fiber hydrophobic porous membranes while being discharged from the second housing side tube of the membrane module for membrane distillation (100), and returning to the absorbing solution tank (300) through the absorbing solution return tube (t4).

In the membrane module for membrane distillation (100), the feed solution (FS) and absorbing solution (Ab) contact through the hollow fiber hydrophobic porous membranes, with the difference between the organic solvent vapor pressures of both solutions acting as driving force to cause the organic solvent vapor generated from the feed solution (FS) to penetrate through the hydrophobic porous membrane and to be incorporated into the absorbing solution (Ab), whereby the organic solvent is removed from the feed solution (FS).

The organic solvent removal device (1000) shown in Fig. 2 may also be equipped with measuring instruments such as a thermometer, flow meter, pressure gauge, conductivity meter and refractometer, and maintenance members such as a drain valve, bypass tubing and viewing port, as suitable and as necessary.

The feed solution tank (200) and absorbing solution tank (300) may each be equipped with a jacket for temperature control, and heat exchangers may also be provided in the feed solution tubing system ($t_{FS}$) and absorbing solution tubing system (tAb) for temperature control.

The materials of the feed solution tank (200), absorbing solution tank (300), feed solution tubing system ($t_{FS}$) and absorbing solution tubing system (tAb), and the heat exchangers when present, may be selected from among stainless steel, titanium, palladium-containing titanium, nickel, hastelloy alloy and graphite, for example.

In the organic solvent removal device (1000) of Fig. 2, the water as the absorbing solution may be brought directly to the first housing side tube of the membrane module for membrane distillation (100), without providing an absorbing solution tank (300), and may be circulated through the space B on the outsides of the hollow fiber hydrophobic porous membranes.

<Concentration method>

Another aspect of the invention provides a feed solution concentration method, and a system for it.

The concentration method for a feed solution of the invention is a concentration method for a feed solution which comprises a solute, an organic solvent and water, the method comprising:

organic solvent removal in which the feed solution and an absorbing solution are contacted through a hydrophobic porous membrane, causing the organic solvent in the feed solution to move into the absorbing solution, and
water removal by a forward osmosis process, in which the feed solution and a draw solution are contacted through a forward osmosis membrane, causing the water in the feed solution to move into the draw solution,

wherein in the organic solvent removal,

the absorbing solution may contain or not contain an organic solvent of the same type as the organic solvent in the feed solution,
the vapor pressure of the organic solvent in the feed solution at 25°C is 0.60 kPa or higher,
the temperature of the feed solution that contacts with the hydrophobic porous membrane is 40°C or lower,
the temperature of the absorbing solution that contacts with the hydrophobic porous membrane is 5°C or higher,
the temperature difference between the feed solution and the absorbing solution is 10°C or less, and
the vapor pressure of the organic solvent in the feed solution that contacts with the hydrophobic porous membrane is higher than the vapor pressure of the organic solvent in the absorbing solution that contacts with the hydrophobic porous membrane.

The concentration method of the invention is a concentration method for a feed solution comprising a solute, an organic solvent and water, which combines:

organic solvent removal in which the organic solvent is removed from the feed solution by the organic solvent removal method of the invention described above, and
water removal in which the water is removed from the feed solution by a forward osmosis process,

in order to remove the organic solvent and water from the feed solution and thus concentrate the feed solution.

The aforementioned description of the organic solvent removal method of the invention may be applied, either directly or with appropriate changes made by a person having ordinary skill in the art, for organic solvent removal in the concentration method of the invention .

The water removal in the concentration method of the invention is carried out by a forward osmosis process.

In a forward osmosis process, the feed solution and a draw solution are contacted through a forward osmosis membrane, causing the water in the feed solution to migrate into the draw solution, thus removing the water from the feed solution.

The forward osmosis membrane may be a composite membrane having a separation active layer on either or both the inner surface and outer surface of a hollow fiber porous support layer. The separation active layer is a layer having performance as a semi-permeable membrane to allow passage of only specific substances (the solvent of the feed solution, such as water).

The feed solution may be disposed in contact with the side of the forward osmosis membrane which has the separation active layer.

The draw solution is a liquid with higher osmotic pressure than the feed solution. If the draw solution and the feed solution are situated facing each other across a forward osmosis membrane in this manner, the solvent in the feed solution (mainly water) will penetrate through the forward osmosis membrane and move into the draw solution, based on the osmotic pressure difference of the two solutions as the driving force, thus removing the water from the feed solution.

The draw solution may be a solution of the draw solute, and is preferably an aqueous solution of the draw solute.

Examples of draw solutes include:

salts that are readily soluble in water, such as sodium chloride, potassium chloride, sodium sulfate, sodium thiosulfate, sodium sulfite, ammonium chloride, ammonium sulfate and ammonium carbonate;
alcohols such as methanol, ethanol, 1-propanol and 2-propanol; glycols such as ethylene glycol and propylene glycol; polymers such as polyethylene oxide and propylene oxide; and
copolymers of monomers composing these polymers.

When the draw solute is a liquid, it may be used directly without forming a solution (such as an aqueous solution).

In the concentration method of the invention, the speed of each removal process may be adjusted so that the amount of organic solvent removed in the organic solvent removal and the amount of water removed in the water removal are in an appropriate ratio, in order to obtain a concentrate with the ratio of organic solvent and water controlled to the desired proportion.

The organic solvent removal and water removal may be carried in series or in parallel. The organic solvent removal and water removal may also be carried out either in one pass or in a cyclical manner.

In the concentration method of the invention, the forward osmosis membrane is preferably used in the form of a forward osmosis membrane module having a plurality of forward osmosis membranes housed in a suitable housing.

Most preferably, it is a forward osmosis membrane module wherein a plurality of hollow fiber forward osmosis membranes are housed in a cylindrical housing with the lengthwise directions of the hollow fibers arranged essentially parallel to the axial direction of the housing, and with both ends of the hollow fibers anchored with an adhesive resin, but with both ends of the hollow fibers being open and not closed off by the adhesive resin.

The interior of the forward osmosis membrane module is divided by the forward osmosis membranes into spaces on the hollow section sides of the forward osmosis membranes, and spaces on the exterior space sides of the forward osmosis membranes.

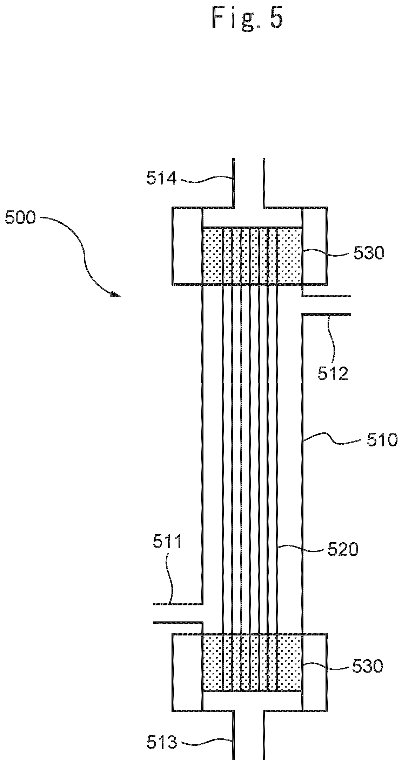

Fig. 5 is a simplified cross-sectional view showing an example of the construction of a forward osmosis membrane module to be used in the concentration method of the invention. The forward osmosis membrane module of Fig. 5 is an example of a large-sized forward osmosis membrane module suitable for large scale concentration.

The large-sized forward osmosis membrane module (500) of Fig. 5 has a plurality of hollow fiber forward osmosis membranes (520) housed in a housing (510), with both ends thereof adhesively anchored by an adhesive resin (530). Both ends of each forward osmosis membrane (520) are open without being closed off.

The sides of the housing (510) have a first housing side tube (511) for inflow of a draw solution (DS) and a second housing side tube (512) for discharge of the draw solution (DS), which allow the draw solution (DS) to circulate through the exterior space of the forward osmosis membrane (520).

At the respective ends in the axial direction of the housing (510) (the up-down direction in Fig. 5) there are provided a bottom header having a lower opening (513) for inflow of a feed solution (FS) and a top header having an upper opening (514) for discharge of the feed solution (FS), which allow the feed solution (FS) to be circulated through the hollow section of the forward osmosis membrane (520).

The interior of the large-sized forward osmosis membrane module (500) is divided by the forward osmosis membranes (520) into space C on the hollow section sides of the forward osmosis membranes (520), and space D on the exterior space sides of the forward osmosis membranes (520). The two spaces are blocked from mutual flow, except that water can pass back and forth through the external walls of the forward osmosis membranes (520).

<Concentration system>

The concentration system of the invention is a system to be suitably used to carry out the feed solution concentration method explained above.

The concentration system of the invention is a concentration system comprising an organic solvent removal device as described above and a water removal device,
wherein the water removal device is a water removal device which comprises:
a forward osmosis module having:

   a space C for contact of one side of the forward osmosis membrane with a feed solution, and
   a space D for contact of the other side of the forward osmosis membrane with a draw solution,
   a second feed solution pump for delivery of the feed solution into the space C, and
   a draw solution pump for delivery of the draw solution into the space D.

The aforementioned description of the organic solvent removal device to be suitably used in the organic solvent removal method of the invention may be applied either directly or with appropriate changes made by a person having ordinary skill in the art, for the organic solvent removal device in the concentration system of the invention.

A water removal device of the invention comprises:
a forward osmosis module having:

   a space C for contact of one side of the forward osmosis membrane with a feed solution, and
   a space D for contact of the other side of the forward osmosis membrane with a draw solution,
   a second feed solution pump for delivery of the feed solution into the space C, and
   a draw solution pump for delivery of the draw solution into the space D.

The water removal device may also have one or more selected from among a feed solution tank for holding of the feed solution, a draw solution tank for holding of the draw solution, a feed solution tubing system for delivery of the feed solution, and a draw solution tubing system for delivery of the draw solution. One preferred mode of the invention is a concentration system of the invention having one feed solution tank, which is used for both the feed solution tank of the organic solvent removal device and the feed solution tank of the water removal device.

The feed solution tubing system includes a feed solution supply tube for delivery of the feed solution held in the feed solution tank to the forward osmosis membrane module, and a feed solution return tube for return of the feed solution that has passed through the forward osmosis membrane module and has had the water removed, back to the feed solution tank. A part of the feed solution supply tube may also be used as the feed solution supply tube for the organic solvent removal device.

The draw solution tubing system includes a draw solution supply tube for delivery of the draw solution held in the draw solution tank to the forward osmosis membrane module, and a draw solution return tube for return of the draw solution that has passed through the forward osmosis membrane module and has incorporated water, back to the draw solution tank.

An especially preferred example of one aspect of the concentration system of the invention will now be explained with reference to the accompanying drawings.

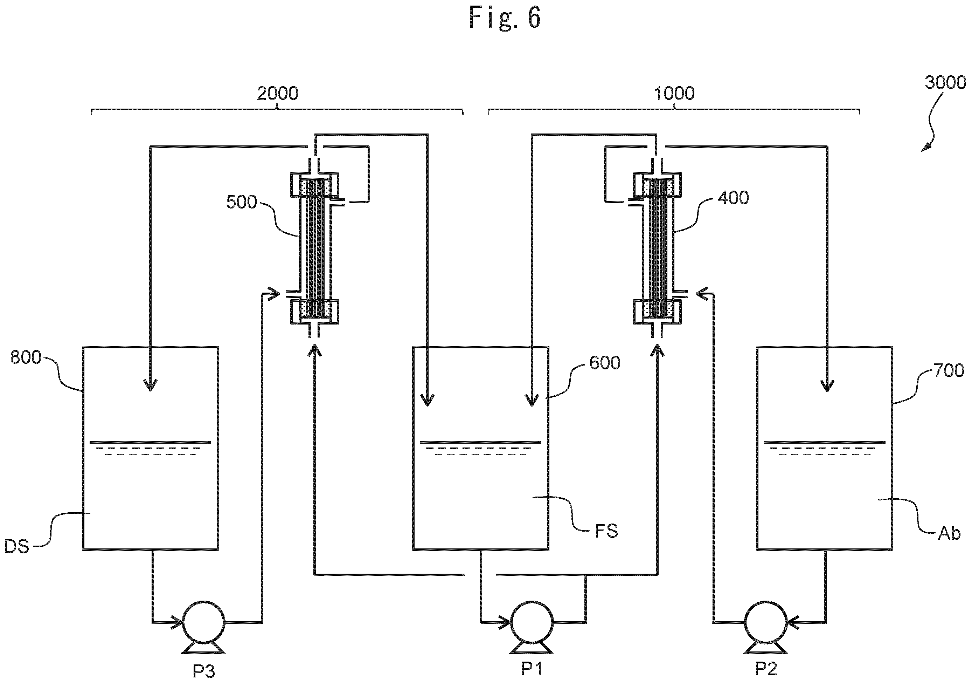

Fig. 6 is a schematic diagram showing an example of the construction of a concentration system of the invention. The concentration system of Fig. 6 is an example of a large-sized concentration system suitable for use in large scale feed solution concentration.

The concentration system (3000) of Fig. 6 includes an organic solvent removal device (1000) and a water removal device (2000).

The organic solvent removal device (1000) has a large-sized membrane module for membrane distillation (400), a large-sized feed solution tank (600) and a large-sized absorbing solution tank (700), with the large-sized feed solution tank (600) and large-sized membrane module for membrane distillation (400) being connected by a feed solution tubing system between them, and the large-sized absorbing solution tank (700) and large-sized membrane module for membrane distillation (400) being connected by an absorbing solution tubing system between them.

The feed solution tubing system includes a feed solution supply tube connecting the large-sized feed solution tank (600) with the lower opening of the large-sized membrane module for membrane distillation (400), and a feed solution return tube connecting the upper opening of the large-sized membrane module for membrane distillation (400) with the large-sized feed solution tank (600). The absorbing solution tubing system includes an absorbing solution supply tube connecting the large-sized absorbing solution tank (700) with the first housing side tube of the large-sized membrane module for membrane distillation (400), and an absorbing solution return tube connecting the second housing side tube of the large-sized membrane module for membrane distillation (400) with the large-sized absorbing solution tank (700).

In the feed solution tubing system, a feed solution pump (P1) is provided for delivery of the feed solution (FS), while in the absorbing solution tubing system an absorbing solution pump (P2) is provided for delivery of the absorbing solution (Ab).

The feed solution (FS) housed in the large-sized feed solution tank (600) is brought to the lower opening of the large-sized membrane module for membrane distillation (400) through the feed solution supply tube by the feed solution pump (P1), and passes through the space A on the insides of the hollow fiber hydrophobic porous membranes while being discharged from the upper opening of the large-sized membrane module for membrane distillation (400), and returning to the large-sized feed solution tank (600) through the feed solution return tube.

The absorbing solution (Ab) housed in the large-sized absorbing solution tank (700), on the other hand, is brought to the first housing side tube of the large-sized membrane module for membrane distillation (400) through the absorbing solution supply tube by the absorbing solution pump (P2), and passes through the space B on the outsides of the hollow fiber hydrophobic porous membranes while being discharged from the second housing side tube of the large-sized membrane module for membrane distillation (400), and returning to the large-sized absorbing solution tank (700) through the absorbing solution return tube.

In the large-sized membrane module for membrane distillation (400), the feed solution (FS) and absorbing solution (Ab) contact through the hollow fiber hydrophobic porous membranes, with the difference between the organic solvent vapor pressures of both solutions acting as driving force to cause the organic solvent vapor generated from the feed solution (FS) to penetrate through the hydrophobic porous membrane and to be incorporated into the absorbing solution (Ab), whereby the organic solvent is removed from the feed solution (FS).

The water removal device (2000) has a large-sized forward osmosis membrane module (500), a large-sized feed solution tank (600) and a large-sized draw solution tank (800), with the large-sized feed solution tank (600) and large-sized forward osmosis membrane module (500) being connected by a feed solution tubing system between them, and the large-sized draw solution tank (800) and large-sized forward osmosis membrane module (500) being connected by a draw solution tubing system between them.

The large-sized feed solution tank (600) is used for both the feed solution tank of the organic solvent removal device (1000) and the feed solution tank of the water removal device (2000).

The feed solution tubing system includes a feed solution supply tube connecting the large-sized feed solution tank (600) with the lower opening of the large-sized forward osmosis membrane module (500), and a feed solution return tube connecting the upper opening of the large-sized forward osmosis membrane module (500) with the large-sized feed solution tank (600). A part of the feed solution supply tube may also be used as the feed solution supply tube for the organic solvent removal device (1000).

The draw solution tubing system includes a draw solution supply tube connecting the large-sized draw solution tank (800) with the first housing side tube of the large-sized forward osmosis membrane module (500), and a draw solution return tube connecting the second housing side tube of the large-sized forward osmosis membrane module (500) with the large-sized draw solution tank (800).

In the feed solution tubing system, a feed solution pump (P1) is provided for delivery of the feed solution (FS), while in the draw solution tubing system a draw solution pump (P3) is provided for delivery of the draw solution (DS). The feed solution pump (P1) is also used for the feed solution pump of the organic solvent removal device (1000).

The feed solution (FS) housed in the large-sized feed solution tank (600) is brought to the lower opening of the large-sized forward osmosis membrane module (500) through the feed solution supply tube by the feed solution pump (P1), and passes through the space C on the insides of the hollow fiber forward osmosis membranes while being discharged from the upper opening of the large-sized forward osmosis membrane module (500), and returning to the large-sized feed solution tank (600) through the feed solution return tube.

The draw solution (DS) housed in the large-sized draw solution tank (800), on the other hand, is brought to the first housing side tube of the large-sized forward osmosis membrane module (500) through the draw solution tube by the draw solution pump (P3), and passes through the space D on the outsides of the hollow fiber forward osmosis membranes while being discharged from the second housing side tube of the large-sized forward osmosis membrane module (500), and returning to the large-sized absorbing solution tank (700) through the draw solution return tube.

In the large-sized forward osmosis membrane module (500), the feed solution (FS) and draw solution (DS) contact through the hollow fiber forward osmosis membranes, with the difference between the osmotic pressure differences of both solutions acting as driving force to cause the water in the feed solution (FS) to penetrate through the forward osmosis membranes and to be incorporated into the draw solution (DS), whereby the water is removed from the feed solution (FS).

In the concentration system (3000) of Fig. 6, the water and organic solvent are removed from the feed solution by the mechanism described above, resulting in concentration of the feed solution. Operation is carried out while adjusting the amount of removal by each removal device so that the amount of organic solvent removed in the organic solvent removal device (1000) and the amount of water removed in the water removal device (2000) are in an appropriate ratio, in order to obtain a concentrate with the ratio of organic solvent and water controlled to the desired proportion.

EXAMPLES

Examples and Comparative Examples will now be described as non-limitative examples to demonstrate the effect of the invention.

For these Examples, membrane modules for membrane distillation comprising hydrophobic porous membranes were fabricated and feed solutions and absorbing solutions with specified compositions were used for removal of the organic solvent in each feed solution using an organic solvent removal device (1000) having the construction shown in Fig. 2, and evaluation was conducted. Specifically, 2,000 mL of feed solution and 2,000 mL of absorbing solution were passed through a membrane module for membrane distillation under predetermined conditions, and operation was conducted for 24 hours, after which the feed solution and absorbing solution were each exchanged with fresh solutions of the same composition, and operation was continued for an additional 24 hours for a total maximum operation time of 168 hours (24 hours × 7 times). When wetting of the membrane distillation membrane occurred before an operating time of 150 hours, operation was halted at that point.

Operation was carried out 5 times for each of the Examples and Comparative Examples.

The feed solution used was a solution comprising 1,000 ppm of glutathione and 1,000 ppm of sodium chloride dissolved in a mixed solvent of water and a specified organic solvent. This feed solution is a mock solution for a feed solution containing a bulk pharmaceutical.

Since sodium chloride was added to the feed solution, wetting of the membrane distillation membrane caused a rise in electric conductivity of the absorbing solution, making it possible to judge that wetting of the membrane had occurred.

At 24 hours after the start of operation (the first 24 hours of operation), the oxidation rate of glutathione was examined by the following method.

<Measurement of glutathione oxidation rate>

Portions of the feed solution before the start of operation and of the feed solution at 24 hours after the start of operation were sampled, Ellman's reagent (5,5'-dithiobis(2-nitrobenzoic acid)) was added in an amount of 1.1 mol with respect to glutathione (stoichiometric amount), and the mixture was shaken for 10 minutes, after which it was supplied to a UV-vis plate reader and the absorbance at 405 nm was measured.

The value of the absorbance of the feed solution at 24 hours after the start of operation was compared with the value of the absorbance of the feed solution before the start of operation, and the percentage reduction was recorded as the glutathione oxidation rate.

The time to wetting of the membrane distillation membrane (wetting time) and the glutathione oxidation rate were averaged from 5 separate operations.

The evaluation result was:

"highly satisfactory (A)" for a wetting time of 150 hours or longer and a glutathione oxidation rate of lower than 10%;
"satisfactory (B)" for a wetting time of 100 hours or longer and less than 150 hours and a glutathione oxidation rate of lower than 10%; and
"unsatisfactory (C)" for a wetting time of less than 100 hours or a glutathione oxidation rate of 10% or higher.

The glutathione oxidation rate may also be calculated from the ratio of glutathione and glutathione disulfide, determined by high-performance liquid chromatography (HPLC). The glutathione oxidation rate is determined by the following formula:

Glutathione oxidation rate (%) = {Peak area for glutathione/(peak area for glutathione + peak area for glutathione disulfide)} × 100

The peak area is the area of the portion delineated by the baseline and the peak line in the HPLC chart, and it is calculated for each compound detected in HPLC analysis.

As a separate method, calibration curves may be separately prepared for glutathione and glutathione disulfide, using their calibration curves as the basis for quantifying the concentrations of glutathione and glutathione disulfide in the feed solution after organic solvent removal, to determine the glutathione oxidation rate.

When the glutathione oxidation rate is determined by HPLC, the HPLC measuring conditions may be, but are not limited to, the following.

The sample supplied for measurement is cooled to 10°C or lower to prevent increase in impurities during HPLC analysis. The HPLC analysis conditions may be the following, for example.

(Devices)

System controller: CBM-20A (Shimadzu Corp.)
Detector: SPD-20A (Shimadzu Corp.)
Pump: LC-20AD (Shimadzu Corp.)
Autosampler: SIL-20ACHT (Shimadzu Corp.)
Column oven: CTO-20AC (Shimadzu Corp.)
Degasser: DGU-20A (Shimadzu Corp.)
Detector: ultraviolet absorptiometer (measuring wavelength: 210 nm)
Column: "Inertsil ODS-3", particle diameter: 3 $\mu$m, 3.0 $\times$ 150 mm (GL Sciences)

(Measuring conditions)

Mobile phase: A 3 W/V% methanol solution containing 0.20 W/V% sodium 1-heptanesulfonate and 0.66 W/V% potassium dihydrogen phosphate (adjusted to pH 3.0 with phosphoric acid).

Column temperature: 35°C
Mobile phase flow rate: 0.4 to 0.7 mL/min (adjusted for a glutathione retention time of about 5 minutes)
Sample injection rate: 30 $\mu$L
Sample preparation method: 5 g of feed solution for organic solvent removal is weighed out and dissolved in 100 mL of mobile phase as a sample.

For assay of the glutathione oxidation rate by HPLC measurement under the conditions described above, the detection limit is 0.001 with respect to 100 as the peak area for reduced glutathione.

<Example 1>

(1) Fabrication of membrane module for membrane distillation

For Example 1, a hollow fiber hydrophobic porous membrane (20) composed of polyvinylidene fluoride was used as the membrane distillation membrane, carrying out organic solvent removal by membrane distillation from a feed solution (a) after adhering the hydrophobic polymer described below to the membrane.

Hydrophobic porous membranes (20) were filled into a membrane module for membrane distillation (100) having the construction shown in Fig. 1. As the hydrophobic porous membranes (20) there were used polyvinylidene fluoride porous hollow fiber membranes having an inner diameter of 0.7 mm, an outer diameter of 1.3 mm, an average pore diameter of 0.21 $\mu$m determined according to ASTM-F316-86, a maximum pore diameter of 0.29 $\mu$m and a void percentage of 72%, cut to a length of 15 cm. The water contact angle of each hydrophobic porous hollow fiber membrane was 92°.

After bundling 90 of the hydrophobic porous membranes (20) and placing the bundle in a housing (10), a thermosetting epoxy resin was used as an adhesive resin (30) for adhesive anchoring in the housing (10) by centrifugal bonding.

After pouring 35 mL of a solution comprising a fluorine-based solvent added to the water repellent FLUOROSURF FS-392B (fluorine-containing polymer solution by Fluorotechnology Co.), and adjusted to a polymer concentration of 1.0 mass%, into the hollow fiber membranes of the resulting module, the module was shaken for 5 minutes. The water repellent solution was then removed from the module and air was blown through for drying.

This procedure was used to fabricate a membrane module for membrane distillation (100) housing a bundle of hollow fiber membrane distillation membranes, and having an effective length of 10 cm (length of the section not embedded in the adhesive resin (30)) and a total membrane area of 200 cm$^2$ on the inner surfaces of the hydrophobic porous membranes (20).

The LEP of the membrane distillation membranes in the membrane module for membrane distillation was measured to be 220 kPa, using a 20 mass% ethanol aqueous solution. The ethanol aqueous solution filled the spaces on both the insides and outsides of the hollow fiber membranes of the membrane module for membrane distillation, with the insides of the hollow fiber membrane being pressurized for measurement.

(2) Organic solvent removal

The fabricated membrane module for membrane distillation (100) was inserted into an organic solvent removal device (1000) having the construction shown in Fig. 2. In the membrane module for membrane distillation (100) of the organic solvent removal device (1000) of Fig. 2, the feed solution is circulated on the insides of the hydrophobic porous hollow fiber membranes while the absorbing solution is circulated on the outsides of the hydrophobic porous hollow fiber membranes, with the direction of circulation of both solutions being in concurrent flow.

The feed solution tank (200) and absorbing solution tank (300) were covered with a temperature control jacket as a temperature control device.

In Example 1, the solvent used for the feed solution was a mixed solvent comprising 15 mass% acetonitrile and water.

Water at 25°C was flowed through the respective temperature control jackets of the feed solution tank and absorbing solution tank, controlling the temperatures of the feed solution and absorbing solution to about 25°C.

Operation was carried out with the flow rates in the membrane module for membrane distillation at 20 cm/s for the feed solution and 4 cm/s for the absorbing solution.

To determine the presence or absence of wetting of the membrane distillation membranes during this time, the electric conductivity of the absorbing solution during operation was monitored, allowing detection based on the electric conductivity of the absorbing solution. The electric conductivity of the absorbing solution was 0.1 μS/cm at the start of operation.

During operation, the temperature of the feed solution when entering into the lower opening (13) of the membrane module for membrane distillation, the temperature of the absorbing solution when entering into the first housing side tube (11), the mass of the feed solution tank (200), the electric conductivity of the absorbing solution and the flux of the hydrophobic porous membrane were monitored. The flux of the hydrophobic porous membrane was calculated by the following formula.

[Mathematical Formula 4]

$$\text{Flux} \ (\text{kg}/(\text{m}^2 \times \text{h})) = \frac{\text{Absorbing solution tank mass increase per hour (kg/h)}}{\text{Membrane distillation membrane module area (m}^2)}$$

The electric conductivity of the absorbing solution after 150 hours of operation was lower than 50 μS/cm, confirming that no wetting of the membrane distillation membrane had occurred.

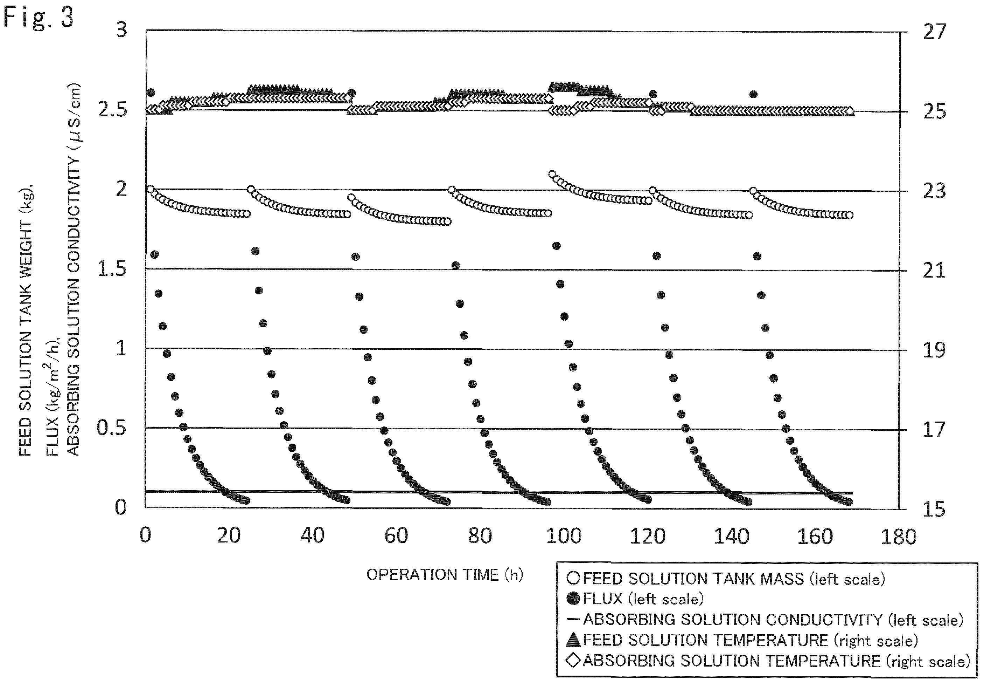

Fig. 3 shows time-dependent change in feed solution tank mass (kg), average flux (kg/(m$^2$ × h)), absorbing solution electric conductivity (μS/cm), feed solution temperature (°C) and temperature of the absorbing solution (°C).

<Examples 2 to 19 and Comparative Examples 1 to 5>

Operation was carried out in the same manner as Example 1, except that the solvent composition of the feed solution, the composition of the absorbing solution, the temperatures and linear speeds of both solutions and the temperature control devices of the feed solution tank and absorbing solution tank were changed as listed in Tables 1 and 2.

For Comparative Examples 1 to 5, the solution temperature was controlled by connecting a SUS double tube heat exchanger between each tank and the membrane module for membrane distillation, in addition to the temperature control jackets of the feed solution tank and absorbing solution tank.

With the double tube heat exchangers connected between the feed solution tank and the membrane module for membrane distillation in these Comparative Examples, the feed solution was flowed through the internal fluid channel and water was flowed through the external fluid channel at the temperatures listed in Table 2. The ratios of the surface area of the internal fluid channel of the double tube heat exchanger used with respect to the total membrane area of the membrane module for membrane distillation are also shown in Table 2.

In addition, the absorbing solution was flowed into the internal fluid channel and a coolant at a specified temperature was flowed into the external fluid channel, with the double tube heat exchanger connected between the absorbing solution tank and membrane module for membrane distillation.

In Comparative Example 3, the absorbing solution in the double tube heat exchanger froze, and therefore operation was halted at that point.

The results for the Examples and Comparative Examples are shown in Table 2.

Table 1 also shows the vapor pressure of the organic solvent in the feed solution at 25°C, and the vapor pressures of the organic solvents in the feed solution and in the absorbing solution at the contact temperature with the distillation membrane (liquid temperature).

[Table 3]

| Table 1 | | | | | | | | | |
|---|---|---|---|---|---|---|---|---|---|
| | Feed solution | | | | | Absorbing solution | | | |
| | Solute (ppm) | Solvent composition | Membrane contact temperature | Organic solvent vapor pressure | | Composition | Membrane contact temperature | Organic solvent vapor pressure (contact temperature at membrane) | Relationship of organic solvent vapor pressures (contact temperature at membrane) |
| | | | | @25°C | Contact temperature at membrane | | | | |
| Example 1 | Glutathione (1000) NaCl (1000) | 15 wt% MeCN 85 wt% $H_2O$ | 25°C | 5.38 kPa - | 5.38 kPa - | 100 wt% $H_2O$ | 25°C | 0 kPa | Feed solution > absorbing solution |
| Example 2 | Glutathione (1000) NaCl (1000) | 20 wt% MeCN 5 wt% MeOH 75 wt% $H_2O$ | 25°C | 6.36 kPa 0.93 kPa - | 6.36 kPa 0.93 kPa - | 100 wt% $H_2O$ | 25°C | 0 kPa | Feed solution > absorbing solution |
| Example 3 | Glutathione (1000) NaCl (1000) | 25 wt% MeCN 75 wt% $H_2O$ | 25°C | 7.08 kPa - | 7.08 kPa - | 100 wt% $H_2O$ | 25°C | 0 kPa | Feed solution > absorbing solution |
| Example 4 | Glutathione (1000) NaCl (1000) | 30 wt% MeCN 5 wt% iPrOH 65 wt% $H_2O$ | 25°C | 7.65 kPa 1.05 kPa - | 7.65 kPa 1.05 kPa - | 100 wt% $H_2O$ | 25°C | 0 kPa | Feed solution > absorbing solution |
| Example 5 | Glutathione (1000) NaCl (1000) | 15 wt% MeCN 10 wt% EtOH 75 wt% $H_2O$ | 25°C | 5.38 kPa 1.40 kPa - | 5.38 kPa 1.40 kPa - | 5 wt% MeCN 95 wt% $H_2O$ | 25°C | 2.37 kPa | Feed solution > absorbing solution |
| Example 6 | Glutathione (1000) NaCl (1000) | 20 wt% MeCN 80 wt% $H_2O$ | 25°C | 6.35 kPa - | 6.35 kPa - | 5 wt% MeCN 95 wt% $H_2O$ | 25°C | 2.37 kPa | Feed solution > absorbing solution |
| Example 7 | Glutathione (1000) NaCl (1000) | 15 wt% MeCN 15 wt% iPrOH 70 wt% $H_2O$ | 37°C | 5.38 kPa 1.73 kPa - | 9.27 kPa 4.00 kPa - | 100 wt% $H_2O$ | 30°C | 0 kPa | Feed solution > absorbing solution |

| Table 1 | | | | | | | | | | |
|---|---|---|---|---|---|---|---|---|---|---|
| | | Feed solution | | | | | Absorbing solution | | | |
| | | | | | Organic solvent vapor pressure | | | | Organic solvent vapor pressure (contact temperature at membrane) | Relationship of organic solvent vapor pressures (contact temperature at membrane) |
| | Solute (ppm) | Solvent composition | Membrane contact temperature | @25°C | Contact temperature at membrane | Composition | Membrane contact temperature | | | |
| Example 8 | Glutathione (1000) NaCl (1000) | 15 wt% MeCN 85 wt% $H_2O$ | 30°C | 5.38 kPa - | 6.79 kPa - | 100 wt% $H_2O$ | 30°C | 0 kPa | Feed solution > absorbing solution | |

EP 4 545 171 A1

[Table 4]

| Table 1 (cont.) | | | | | | | | | |
|---|---|---|---|---|---|---|---|---|---|
| | Feed solution | | | | | Absorbing solution | | | Relationship of organic solvent vapor pressures (contact temperature at membrane) |
| | Solute (ppm) | Solvent composition | Membrane contact temperature | Organic solvent vapor pressure | | Composition | Membrane contact temperature | Organic solvent vapor pressure (contact temperature at membrane) | |
| | | | | @25°C | Contact temperature at membrane | | | | |
| Example 9 | Glutathione (1000) NaCl (1000) | 30 wt% MeCN 70 wt% $H_2O$ | 25°C | 7.65 kPa - | 7.65 kPa - | 100 wt% $H_2O$ | 20°C | 0 kPa | Feed solution > absorbing solution |
| Example 10 | Glutathione (1000) NaCl (1000) | 30 wt% MeCN 70 wt% $H_2O$ | 25°C | 7.65 kPa - | 7.65 kPa - | 100 wt% $H_2O$ | 15°C | 0 kPa | Feed solution > absorbing solution |
| Example 11 | Glutathione (1000) NaCl (1000) | 30 wt% MeCN 70 wt% $H_2O$ | 25°C | 7.65 kPa - | 7.65 kPa - | 100 wt% $H_2O$ | 25°C | 0 kPa | Feed solution > absorbing solution |
| Example 12 | Glutathione (1000) NaCl (1000) | 30 wt% MeCN 70 wt% $H_2O$ | 25°C | 7.65 kPa - | 7.65 kPa - | 100 wt% $H_2O$ | 25°C | 0 kPa | Feed solution > absorbing solution |
| Example 13 | Glutathione (1000) NaCl (1000) | 40 wt% EtOH 60 wt% $H_2O$ | 25°C | 8.45 kPa - | 8.45 kPa - | 100 wt% $H_2O$ | 25°C | 0 kPa | Feed solution > absorbing solution |
| Example 14 | Glutathione (1000) NaCl (1000) | 30 wt% MeCN 70 wt% $H_2O$ | 25°C | 7.65 kPa - | 7.65 kPa - | 100 wt% $H_2O$ | 25°C | 0 kPa | Feed solution > absorbing solution |
| Example 15 | Glutathione (1000) NaCl (1000) | 20 wt% EtOH 80 wt% $H_2O$ | 25°C | 2.38 kPa - | 2.38 kPa - | 100 wt% $H_2O$ | 25°C | 0 kPa | Feed solution > absorbing solution |
| Example 16 | Glutathione (1000) NaCl (1000) | 15 wt% MeCN 85 wt% $H_2O$ | 25°C | 5.38 kPa - | 5.38 kPa - | 100 wt% $H_2O$ | 15°C | 0 kPa | Feed solution > absorbing solution |

[Table 5]

| Table 1 (end) | | | | | | | | | |
|---|---|---|---|---|---|---|---|---|---|
| | Feed solution | | | | | Absorbing solution | | | Relationship of organic solvent vapor pressures (contact temperature at membrane) |
| | Solute (ppm) | Solvent composition | Membrane contact temperature | Organic solvent vapor pressure | | Composition | Membrane contact temperature | Organic solvent vapor pressure (contact temperature at membrane) | |
| | | | | @25°C | Contact temperature at membrane | | | | |
| Example 17 | Glutathione (1000) NaCl (1000) | 50 wt% EtOH 50 wt% $H_2O$ | 10°C | 3.93 kPa - | 1.55 kPa - | 100 wt% $H_2O$ | 10°C | 0 kPa | Feed solution > absorbing solution |
| Example 18 | Glutathione (1000) NaCl (1000) | 50 wt% EtOH 50 wt% $H_2O$ | 22°C | 3.93 kPa - | 3.30 kPa - | 100 wt% $H_2O$ | 22°C | 0 kPa | Feed solution > absorbing solution |
| Example 19 | Glutathione (1000) NaCl (1000) | 50 wt% MeCN 50 wt% $H_2O$ | 5°C | 8.95 kPa - | 3.19 kPa - | 100 wt% $H_2O$ | 5°C | 0 kPa | Feed solution > absorbing solution |
| Comp. Ex. 1 | Glutathione (1000) NaCl (1000) | 30 wt% MeCN 70 wt% $H_2O$ | 45°C | 7.65 kPa - | 18.44 kPa - | 100 wt% $H_2O$ | 20°C | 0 kPa | Feed solution > absorbing solution |
| Comp. Ex. 2 | Glutathione (1000) NaCl (1000) | 50 wt% MeCN 50 wt% $H_2O$ | 30°C | 8.95 kPa - | 11.30 kPa - | 100 wt% $H_2O$ | 10°C | 0 kPa | Feed solution > absorbing solution |
| Comp. Ex. 3 | Glutathione (1000) NaCl (1000) | 30 wt% MeCN 70 wt% $H_2O$ | 10°C | 7.65 kPa - | 3.59 kPa - | 100 wt% $H_2O$ | 3°C | 0 kPa | Feed solution > absorbing solution |
| Comp. Ex. 4 | Glutathione (1000) NaCl (1000) | 30 wt% MeCN 70 wt% $H_2O$ | 45°C | 7.65 kPa - | 18.44 kPa - | 100 wt% $H_2O$ | 45°C | 0 kPa | Feed solution > absorbing solution |
| Comp. Ex. 5 | Glutathione (1000) NaCl (1000) | 15 wt% MeCN 85 wt% $H_2O$ | 30°C | 5.38 kPa - | 6.79 kPa - | 100 wt% $H_2O$ | 30°C | 0 kPa | Feed solution > absorbing solution |

[Table 6]

Table 2

| | Liquid temperature | | | Linear speed | | Heat exchanger between feed solution tank/ membrane module | | | Evaluation results | |
|---|---|---|---|---|---|---|---|---|---|---|
| | Feed solution | Absorbing solution | Temperature difference | Feed solution | Supply solution | Type | Area ratio | Heating medium temperature | Wetting time | Oxidation rate |
| Example 1 | 25°C | 25°C | 0°C | 20 cm/s | 4 cm/s | None | ×0 | - | >150 h | <5% |
| Example 2 | 25°C | 25°C | 0°C | 20 cm/s | 4 cm/s | None | ×0 | - | >150 h | <5% |
| Example 3 | 25°C | 25°C | 0°C | 20 cm/s | 4 cm/s | None | ×0 | - | >150 h | <5% |
| Example 4 | 25°C | 25°C | 0°C | 20 cm/s | 4 cm/s | None | ×0 | - | >150 h | <5% |
| Example 5 | 25°C | 25°C | 0°C | 30 cm/s | 4 cm/s | None | ×0 | - | >150 h | <5% |
| Example 6 | 25°C | 25°C | 0°C | 30 cm/s | 4 cm/s | None | ×0 | - | >150 h | <5% |
| Example 7 | 37°C | 30°C | 7°C | 20 cm/s | 4 cm/s | None | ×0 | - | 130 h | 8% |
| Example 8 | 30°C | 30°C | 0°C | 20 cm/s | 4 cm/s | None | ×0 | - | >150 h | 6% |
| Example 9 | 25°C | 20°C | 5°C | 30 cm/s | 4 cm/s | None | ×0 | - | >150 h | <5% |
| Example 10 | 25°C | 15°C | 10°C | 30 cm/s | 4 cm/s | None | ×0 | - | >150 h | <5% |
| Example 11 | 25°C | 25°C | 0°C | 50 cm/s | 4 cm/s | None | ×0 | - | 104 h | <5% |
| Example 12 | 25°C | 25°C | 0°C | 40 cm/s | 4 cm/s | None | ×0 | - | >150 h | <5% |
| Example 13 | 25°C | 25°C | 0°C | 30 cm/s | 2 cm/s | None | ×0 | - | >150 h | <5% |
| Example 14 | 25°C | 25°C | 0°C | 30 cm/s | 1 cm/s | None | ×0 | - | 112 h | <5% |
| Example 15 | 25°C | 25°C | 0°C | 20 cm/s | 4 cm/s | None | ×0 | - | >150 h | <5% |

[Table 7]

| Table 2 (end) | | | | | | | | | | |
|---|---|---|---|---|---|---|---|---|---|---|
| | Liquid temperature | | | Linear speed | | Heat exchanger between feed solution tank/membrane module | | | Evaluation results | |
| | Feed solution | Absorbing solution | Temperature difference | Feed solution | Supply solution | Type | Area ratio | Heating medium temperature | Wetting time | Oxidation rate |
| Example 16 | 25°C | 15°C | 10°C | 30 cm/s | 4 cm/s | None | ×0 | - | >150 h | <5% |
| Example 17 | 10°C | 10°C | 0°C | 10 cm/s | 8 cm/s | None | ×0 | - | >150 h | <5% |
| Example 18 | 22°C | 22°C | 0°C | 10 cm/s | 8 cm/s | None | ×0 | - | >150 h | <5% |
| Example 19 | 5°C | 5°C | 0°C | 10 cm/s | 8 cm/s | None | ×0 | - | >150 h | <5% |
| Comp. Ex. 1 | 45°C | 20°C | 25°C | 30 cm/s | 2 cm/s | Double tube | ×3.0 | 54°C | 60 h | 59% |
| Comp. Ex. 2 | 30°C | 10°C | 20°C | 30 cm/s | 2 cm/s | Double tube | ×3.0 | 35°C | 70 h | 30% |
| Comp. Ex. 3 | 10°C | 3°C | 7°C | 30 cm/s | 2 cm/s | Double tube | ×3.0 | 15°C | Freezing* | <5% |
| Comp. Ex. 4 | 45°C | 45°C | 0°C | 30 cm/s | 4 cm/s | Double tube | ×3.0 | 50°C | 42 h | 73% |
| Comp. Ex. 5 | 30°C | 30°C | 0°C | 20 cm/s | 3 cm/s | Double tube | ×3.0 | 30.5°C | >150 h | 21% |
| * Operation halted in Comp. Ex. 3 when freezing occurred in the double tube. | | | | | | | | | | |

The results shown above confirmed that when the vapor pressure of the organic solvent in the feed solution is set higher than the vapor pressure of the organic solvent in the absorbing solution, and the temperature difference between the feed solution and the absorbing solution is limited to a specified range, it is possible to remove the organic solvent without wetting of the hydrophobic porous membrane over prolonged periods and while suppressing oxidation of the solute.

<Reference Example 20>

A concentration system having the structure shown in Fig. 6 was used for concentration of a feed solution.

(1) Fabrication of large-sized membrane module for membrane distillation

After bundling 800 polyvinylidene fluoride porous hollow fiber membranes, the bundled was housed in a housing and adhesively anchored in the housing by centrifugal bonding using an adhesive resin. The porous hollow fiber membrane used had an inner diameter of 0.7 mm, an outer diameter of 1.3 mm, a maximum pore diameter of 0.29 $\mu$m and a void percentage of 72%, and the average pore diameter was 0.21 $\mu$m as determined according to ASTM-F316-86. The effective lengths of the porous hollow fiber membranes (lengths of the sections not embedded in the adhesive resin) were 430 mm. A thermosetting epoxy resin was used as the adhesive resin.

After passing 2,000 mL of water repellent through the insides of the hollow fiber membranes in the module for 5 minutes and then removing it, air was blown through for drying. The water repellent used was a solution obtained by adding a fluorine-based solvent to FLUOROSURF FS-1610-TH (fluorine-containing polymer solution by Fluorotechnology Co.) and adjusting the polymer concentration to 1.0 mass%.

A large-sized membrane module for membrane distillation having the structure shown in Fig. 4 was fabricated by this procedure. The total membrane area of the inner surfaces of the hydrophobic porous membranes in the module was 0.72 m$^2$, and the LEP of the hydrophobic porous membranes was 180 kPa as measured using a 20 mass% ethanol aqueous solution.

(2) Fabrication of large-sized forward osmosis membrane module

A bundle of 1200 polysulfone hollow fiber membranes was housed in a cylindrical plastic housing having a diameter of 5 cm and a length of 50 cm, and was adhesively anchored in the housing using an adhesive. The ends of the hollow fiber membrane were cut together with the adhesive, opening the ends of the hollow fiber membrane to fabricate a support membrane module. The hollow fiber membranes used here had an inner diameter of 0.6 mm and an outer diameter of 1.0 mm. The effective lengths of the hollow fiber membranes in the module were 430 mm, with an effective membrane inner surface area of 1.0 m$^2$.

An aqueous solution containing 2 mass% m-phenylenediamine and 0.15 mass% sodium lauryl sulfate (first solution) was passed through the insides of the hollow fiber membranes of the obtained support membrane module for 40 minutes, after which the solution was removed. The space on the outside of the support membrane module was then depressurized to 90 kPaG and the pressure was maintained for a predetermined time while the insides of the hollow fibers were wetted with the first solution. Air was then streamed for 10 minutes at a flow rate of 100 L/min to remove the excess first solution.

Next, an n-hexane solution (second solution) containing 0.23 mass% 1,3,5-trimesoyl chloride was passed through the insides of the hollow fiber membranes of the module for 3 minutes for interfacial polymerization, to form a separation active layer on the inner surfaces of the hollow fibers. Nitrogen gas was further flowed through the insides of the hollow fiber membranes to remove the excess *n*-hexane solution, after which hot water at 70°C was flowed through the insides of the hollow fiber membranes for 30 minutes at a flow rate of 1.5 L/min for washing.

The module in the open state was then placed in an autoclave while the washing water was still present in the module, and heated for 60 minutes at 120°C for curing of the separation active layer.

After curing, the insides of the hollow fiber membranes in the module were washed with 20°C water for 30 minutes to obtain a large-sized forward osmosis membrane module having the structure shown in Fig. 5. The hollow fiber forward osmosis membranes in the large-sized forward osmosis membrane module had an effective length of 430 mm, with an effective membrane inner surface area of 1.0 m$^2$.

(3) Construction of concentration system

The large-sized membrane module for membrane distillation and large-sized forward osmosis membrane module fabricated in the manner described above were used to construct a concentration system having the structure shown in Fig. 6.

The feed solution used was 50 kg of a solution comprising 0.1 mass% glutathione, 15.0 mass% acetonitrile, 1.0 mass% acetic acid and 83.9 mass% purified water,

the absorbing solution used was 50 kg of purified water, and

the draw solution used was 50 kg of isopropyl alcohol,

with the solutions being housed in a large-sized feed solution tank, a large-sized absorbing solution tank and a large-sized draw solution tank, respectively. The tanks were all made of SUS316L and had jacket-type temperature control means. Water at 25°C for temperature control was flowed through the jacket of each tank, controlling the temperatures of the feed solution, absorbing solution and draw solution to 25°C.

(4) Concentration operation

The feed solution and absorbing solution were delivered to the large-sized membrane module for membrane distillation, each at a flow rate of 3 L/min. The linear speeds of the feed solution and absorbing solution were 16.2 cm/sec and 4.7 cm/sec, respectively.

The feed solution and draw solution were delivered to the large-sized forward osmosis membrane module, each at a flow rate of 3 L/min. The linear speeds of the feed solution and draw solution were 14.7 cm/sec and 4.9 cm/sec, respectively.

Operation for concentration of the feed solution was carried out under the conditions described above. The amount of feed solution was reduced in weight to 5.0 kg after 7.0 hours.

The solvent composition of the feed solution after concentration was analyzed by gas chromatography. The solvent composition of the feed solution after volume reduction was also analyzed by gas chromatography. The resulting mass ratio was found to be acetonitrile:acetic acid:water:isopropyl alcohol = 7.1:6.9:85.5:0.5. The rate of degeneration of glutathione was also examined by the ratio of the area of the peak for glutathione and the area of the peak for glutathione disulfide in HPLC analysis. The rate of glutathione degeneration was found to be lower than 5%.

<Reference Example 21>

Operation for concentration of a feed solution was carried out in the same manner as Reference Example 20, except that the temperature of the water for temperature control flowing through the jacket of each tank was changed to 15°C, the temperatures of the feed solution, absorbing solution and draw solution were adjusted to 15°C, and the liquid volumes of the feed solution, absorbing solution and draw solution (liquid volumes before concentration) were each changed to 35 kg. The amount of feed solution was reduced in weight to 3.5 kg after 6.5 hours.

The solvent composition of the feed solution after concentration, as analyzed by gas chromatography, was acetonitrile:acetic acid:water:isopropyl alcohol = 6.4:3.4:89.7:0.5 (mass ratio). The rate of degeneration of glutathione was lower than 5%, according to HPLC.

<Reference Example 22>

Operation for concentration of a feed solution was carried out in the same manner as Reference Example 20, except that 50 kg of a 10 mass% acetonitrile aqueous solution was used as the absorbing solution, the temperature of the water for temperature control flowing through the jacket of each tank was changed to 25°C, and the temperatures of the feed solution, absorbing solution and draw solution were adjusted to 25°C. The amount of feed solution was reduced in weight to 5.0 kg after 6.1 hours.

The solvent composition of the feed solution after concentration, as analyzed by gas chromatography, was acetonitrile:acetic acid:water:isopropyl alcohol = 9.8:4.2:85.3:0.7 (mass ratio). The rate of degeneration of glutathione was lower than 5%, according to HPLC.

The results of the Reference Examples confirmed that large scale concentration can be efficiently carried out by the concentration method of the invention.

REFERENCE SIGNS LIST

10 Housing
11 First housing side tube
12 Second housing side tube

13 Lower opening
14 Upper opening
20 Hollow fiber hydrophobic porous membrane
30 Adhesive resin
100 Membrane module for membrane distillation
200 Feed solution tank
300 Absorbing solution tank
400 Large-sized membrane module for membrane distillation
410 Housing
411 First housing side tube
412 Second housing side tube
413 Lower opening
414 Upper opening
420 Hollow fiber hydrophobic porous membrane
430 Adhesive resin
500 Large-sized forward osmosis membrane module
510 Housing
511 First housing side tube
512 Second housing side tube
513 Lower opening
514 Upper opening
520 Hollow fiber forward osmosis membrane
530 Adhesive resin
600 Large-sized feed solution tank
700 Large-sized absorbing solution tank
800 Large-sized draw solution tank
1000 Organic solvent removal device
2000 Water removal device
3000 Concentration system
Ab Absorbing solution
DS Draw solution
FS Feed solution
P1 Feed solution pump
P2 Absorbing solution pump
P3 Draw solution pump
t1 Feed solution supply tube
t2 Feed solution return tube
t3 Absorbing solution supply tube
t4 Absorbing solution return tube
$t_{FS}$ Feed solution tubing system
$t_{Ab}$ Absorbing solution tubing system

**Claims**

1. An organic solvent removal method in which a feed solution comprising a solute, an organic solvent and water is contacted with an absorbing solution through a hydrophobic porous membrane, causing the organic solvent in the feed solution to move into the absorbing solution, wherein:

   the absorbing solution may contain or not contain an organic solvent of the same type as the organic solvent in the feed solution,
   the vapor pressure of the organic solvent in the feed solution at 25°C is 0.60 kPa or higher,
   the temperature of the feed solution that contacts with the hydrophobic porous membrane is 40°C or lower,
   the temperature of the absorbing solution that contacts with the hydrophobic porous membrane is 5°C or higher,
   the temperature difference between the feed solution and the absorbing solution is 10°C or less, and
   the vapor pressure of the organic solvent in the feed solution that contacts with the hydrophobic porous membrane is higher than the vapor pressure of the organic solvent in the absorbing solution that contacts with the hydrophobic porous membrane.

2. The organic solvent removal method according to claim 1, wherein the difference between the vapor pressure of the organic solvent in the feed solution that contacts with the hydrophobic porous membrane and the vapor pressure of the organic solvent in the absorbing solution that contacts with the hydrophobic porous membrane is greater than 0 kPa and 15 kPa or less.

3. The organic solvent removal method according to claim 1, wherein the temperature of the feed solution that contacts with the hydrophobic porous membrane is 35°C or lower.

4. The organic solvent removal method according to claim 1, wherein the linear speed of the absorbing solution, when the absorbing solution contacts with the hydrophobic porous membrane, is 1.0 cm/s or greater.

5. The organic solvent removal method according to claim 1, wherein the linear speed of the feed solution, when the feed solution contacts with the hydrophobic porous membrane, is 50 cm/s or lower.

6. The organic solvent removal method according to claim 1, wherein:

   the linear speed of the absorbing solution, when the absorbing solution contacts with the hydrophobic porous membrane, is 1.0 cm/s or greater, and
   the linear speed of the feed solution, when the feed solution contacts with the hydrophobic porous membrane, is 50 cm/s or lower.

7. The organic solvent removal method according to claim 3, wherein:

   the linear speed of the absorbing solution, when the absorbing solution contacts with the hydrophobic porous membrane, is 1.0 cm/s or greater, and
   the linear speed of the feed solution, when the feed solution contacts with the hydrophobic porous membrane, is 50 cm/s or lower.

8. An organic solvent removal device comprising:

   a membrane module for membrane distillation having a hydrophobic porous membrane, a space A for contact of the feed solution with one side of the hydrophobic porous membrane, and a space B for contact of the absorbing solution with the other side of the hydrophobic porous membrane,
   a feed solution pump for delivery of the feed solution to the space A, and
   an absorbing solution pump for delivery of the absorbing solution to the space B,
   wherein the organic solvent removal device may have or not have a heat exchanger in the tubing for delivery of the feed solution, and
   when the organic solvent removal device has a heat exchanger, the value of the effective area of the heat exchanger divided by the effective membrane area of the membrane module for membrane distillation is 1.5 or lower.

9. The organic solvent removal device according to claim 8, which does not have the heat exchanger.

10. The organic solvent removal device according to claim 8, which has the heat exchanger, and wherein the difference between the temperature of the heating medium passing through the heat exchanger and the predetermined temperature of the feed solution introduced into the membrane module for membrane distillation, is 10°C or lower.

11. The organic solvent removal device according to any one of claims 8 to 10, which is to be used for carrying out the organic solvent removal method according to claim 1.

12. A concentration method for a feed solution which comprises a solute, an organic solvent and water, the method comprising:

    organic solvent removal in which the feed solution and an absorbing solution are contacted through a hydrophobic porous membrane, causing the organic solvent in the feed solution to move into the absorbing solution, and
    water removal in which the feed solution and a draw solution are contacted through a forward osmosis membrane, causing the water in the feed solution to move into the draw solution,

wherein in the organic solvent removal,

the absorbing solution may contain or not contain an organic solvent of the same type as the organic solvent in the feed solution,

the vapor pressure of the organic solvent in the feed solution at 25°C is 0.60 kPa or higher,

the temperature of the feed solution that contacts with the hydrophobic porous membrane is 40°C or lower,

the temperature of the absorbing solution that contacts with the hydrophobic porous membrane is 5°C or higher,

the temperature difference between the feed solution and the absorbing solution is 10°C or less, and

the vapor pressure of the organic solvent in the feed solution that contacts with the hydrophobic porous membrane is higher than the vapor pressure of the organic solvent in the absorbing solution that contacts with the hydrophobic porous membrane.

13. A concentration system comprising an organic solvent removal device according to claim 8 and a water removal device,

wherein the water removal device is a water removal device which comprises:

a forward osmosis module having:

a space C for contact of one side of the forward osmosis membrane with a feed solution, and

a space D for contact of the other side of the forward osmosis membrane with a draw solution,

a second feed solution pump for delivery of the feed solution into the space C, and

a draw solution pump for delivery of the draw solution into the space D.

14. The concentration system according to claim 13, wherein the organic solvent removal device does not have the heat exchanger.

15. The concentration system according to claim 13, wherein the organic solvent removal device has the heat exchanger.

Fig. 1

# Fig. 2

Fig. 3

# Fig. 4

# Fig. 5

Fig. 6

EP 4 545 171 A1

## INTERNATIONAL SEARCH REPORT

| International application No. |
|---|
| **PCT/JP2023/023375** |

### A. CLASSIFICATION OF SUBJECT MATTER

***B01D 61/36***(2006.01)i
FI: B01D61/36

According to International Patent Classification (IPC) or to both national classification and IPC

### B. FIELDS SEARCHED

Minimum documentation searched (classification system followed by classification symbols)

B01D61/36

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2021/070955 A1 (ASAHI KASEI KABUSHIKI KAISHA) 15 April 2021 (2021-04-15) claims, paragraphs [0009], [0011]-[0028], examples, fig. 1-2 | 1-11 |
| Y | | 12-15 |
| Y | WO 2021/054406 A1 (ASAHI KASEI KABUSHIKI KAISHA) 25 March 2021 (2021-03-25) claims, paragraphs [0014], [0056], fig. 6-8 | 12-15 |

☐ Further documents are listed in the continuation of Box C.  ☑ See patent family annex.

| * | Special categories of cited documents: | | |
|---|---|---|---|
| "A" | document defining the general state of the art which is not considered to be of particular relevance | "T" | later document published after the international filing date or priority date and not in conflict with the application but cited to understand the principle or theory underlying the invention |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 August 2023** | **15 August 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2023/023375**

| Patent document cited in search report | | | Publication date (day/month/year) | Patent family member(s) | Publication date (day/month/year) |
|---|---|---|---|---|---|
| WO | 2021/070955 | A1 | 15 April 2021 | EP 4043092 A1 claims, paragraphs [0009], [0011]-[0028], examples, fig. 1-2 CN 114502259 A | |
| WO | 2021/054406 | A1 | 25 March 2021 | EP 4032601 A1 claims, paragraphs [0014], [0056], fig. 6-8 CN 114302766 A | |

Form PCT/ISA/210 (patent family annex) (January 2015)

**EP 4 545 171 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2021181535 A
- WO 2021070955 A